# EUROPEAN PATENT APPLICATION

(11) **EP 4 851 979 A1**
(43) Date of publication of application: **09.12.2026**
(21) Application number: 26183009.5
(22) Date of filing: 03.06.2026
(51) Int. Cl.: G09G 3/18, G09G 3/36, G02F 1/133

(54) **CIRCUIT DEVICE**

(30) Priority: 06.06.2025 JP 2025094531
(71) Applicant: Seiko Epson Corporation, Tokyo 160-8801 (JP)
(72) Inventor: TAKIMOTO, Sohei, Suwa-shi, Nagano, 392-8502 (JP)
(74) Representative: MERH-IP Matias Erny Reichl Hoffmann Patentanwälte PartG mbB

(57) **Abstract**

A circuit device includes a first drive circuit, a first monitoring circuit that detects a voltage of a first output node, and a control circuit. The first drive circuit includes a first charging current source disposed between the first output node and a power supply node to charge the first segment electrode, and a first discharging current source disposed between a ground node and the first output node to discharge the first segment electrode. The control circuit increases the charging current value by the first charging current source as the voltage of the first output node detected by the first monitoring circuit increases, and increases the discharge current value by the first discharging current source as the voltage of the first output node detected by the first monitoring circuit decreases.

## Description

The present application is based on, and claims priority from JP Application Serial Number 2025-094531, filed June 6, 2025, the disclosure of which is hereby incorporated by reference herein in its entirety.

### BACKGROUND

### 1. Technical Field

The present disclosure relates to a circuit device and the like.

### 2. Related Art

In the past, there has been known a light control sheet in which the transmittance of external light is made variable by utilizing the property that the alignment of liquid crystal is changed by applying an electric field. JP-A-2017-181987 discloses a method of providing a change in amplitude of a rectangular wave signal to be applied to the liquid crystal when changing the transmittance.

A control device of the light control sheet is driven at a high voltage, and is therefore large in heat generation amount. In a method based on the purpose of suppressing luminance unevenness as disclosed in JP-A-2017-181987, an effect of suppressing a peak of power consumption does not occur. Therefore, it is desired to propose a method of suppressing heat generation of a circuit device that drives the light control sheet.

### SUMMARY

A first aspect of the present disclosure relates to a circuit device configured to perform polarity inversion driving on a segment electrode and a common electrode of a light control sheet, the circuit device including: a first drive circuit configured to drive a first segment electrode; a first monitoring circuit configured to detect a voltage of a first output node as an output node of the first drive circuit; and a control circuit, wherein the first drive circuit includes a first charging current source disposed between the first output node and a power supply node and configured to charge the first segment electrode, and a first discharging current source disposed between a ground node and the first output node and configured to discharge the first segment electrode, and the control circuit is configured to increase a charging current value by the first charging current source as the voltage of the first output node detected by the first monitoring circuit increases, and increase a discharge current value by the first discharging current source as the voltage of the first output node detected by the first monitoring circuit decreases.

### BRIEF DESCRIPTION OF THE DRAWINGS

FIG. 1 is a diagram illustrating a configuration example of a light control system.
FIG. 2 is a diagram illustrating a configuration example of a first drive circuit.
FIG. 3 is a diagram illustrating a configuration example of a first charging current source and a first discharging current source.
FIG. 4 is a diagram illustrating a configuration example of a first monitoring circuit.
FIG. 5 is a diagram illustrating an example of an operation of the circuit device.
FIG. 6 is another diagram illustrating an example of the operation of the circuit device.
FIG. 7 is another diagram illustrating an example of the operation of the circuit device.
FIG. 8 is another diagram illustrating an example of the operation of the circuit device.
FIG. 9 is another diagram illustrating an example of the operation of the circuit device.
FIG. 10 is a diagram illustrating another example of the operation of the circuit device.
FIG. 11 is a diagram illustrating another example of the operation of the circuit device.
FIG. 12 is a diagram illustrating another example of the operation of the circuit device.
FIG. 13 is a diagram illustrating coupling between the circuit device and a first resistor.
FIG. 14 is a diagram illustrating another configuration example of the light control system.
FIG. 15 is a diagram illustrating a configuration example of a second drive circuit.
FIG. 16 is a diagram illustrating another configuration example of the light control system.

### DESCRIPTION OF EMBODIMENTS

A preferred embodiment of the present disclosure will be described below in detail. The present embodiment described below does not unduly limit the content set forth in the appended claims, and all of the configurations described in the present embodiment are not necessarily essential components.

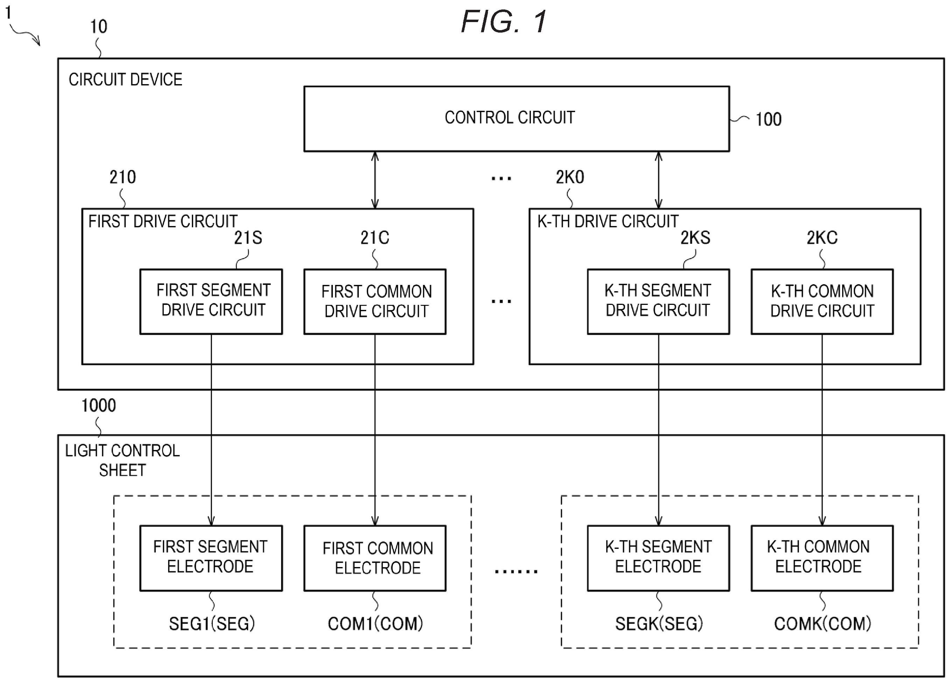

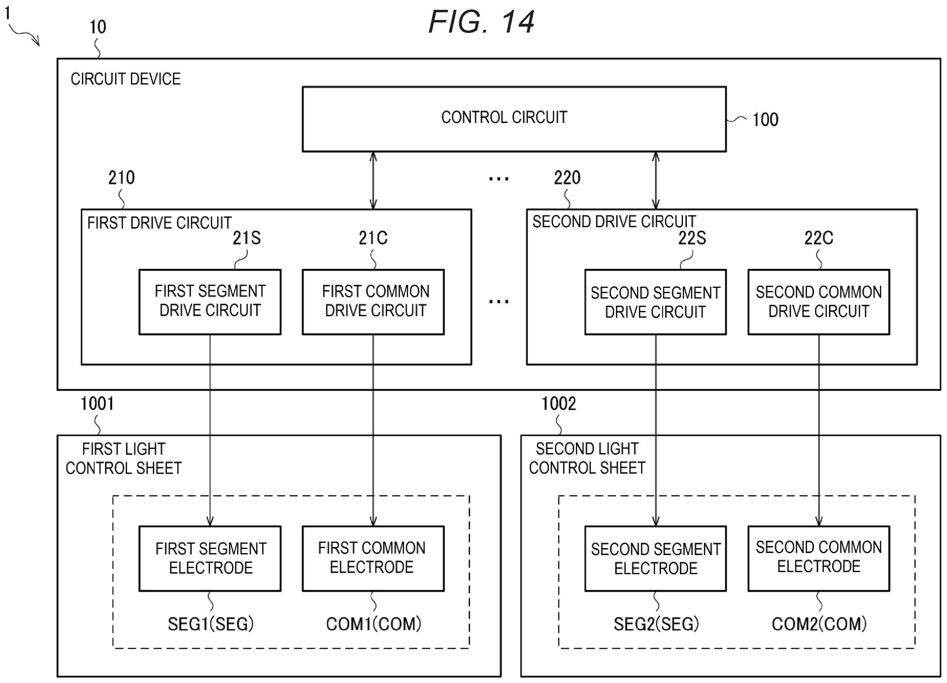

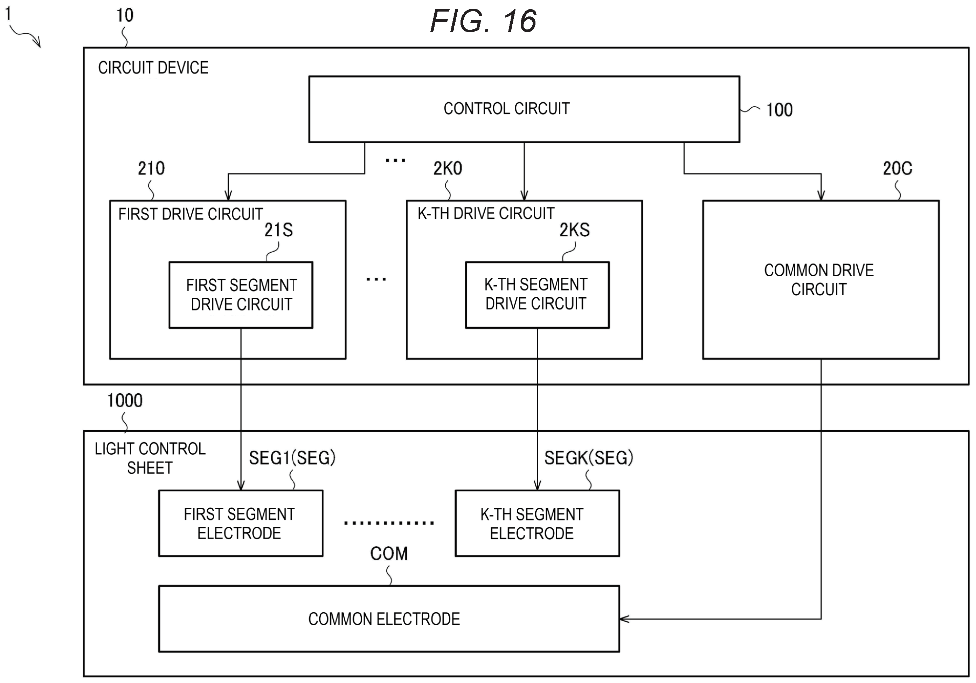

FIG. 1 is a diagram illustrating a configuration example of a light control system 1 including a circuit device 10 according to the present embodiment and a light control sheet 1000. The light control sheet 1000 includes segment electrodes SEG and common electrodes COM. The light control sheet 1000 may include a plurality of segment electrodes SEG and a plurality of common electrodes COM, and for the sake of convenience of explanation, one of the plurality of segment electrodes SEG that the light control sheet 1000 can include may be distinctively referred to as a first segment electrode SEG1 as a representative, and one of the plurality of common electrodes COM that the light control sheet 1000 can include may be distinctively referred to as a first common electrode COM1 in some cases. As described later with reference to FIG. 14, out of the plurality of segment electrodes SEG, another segment electrode SEG than the first segment electrode SEG1 may be further distinctively referred to as a second segment electrode SEG2. Similarly, out of the plurality of common electrodes COM, another common electrode COM than the first common electrode COM1 may be further distinctively referred to as a second common electrode COM2. More generally, as shown in FIG. 1, it can be said that the light control sheet 1000 includes K segment electrodes SEG and K common electrodes COM (K is a natural number no smaller than 2), and a K-th segment electrode SEG can be referred to as a K-th segment electrode SEGK, and a K-th common electrode COM can be referred to as a K-th common electrode COMK. When there is no need to distinguish these electrodes, these electrodes may be simply referred to as segment electrodes SEG, common electrodes COM, and the like. A configuration of the light control system 1 is not limited to FIG. 1, but is described later in detail with reference to FIGS. 14 and 16.

The light control sheet 1000 of the present embodiment includes, for example, a pair of transparent base material layers and a light control layer in addition to the pair of electrode layers with the segment electrodes SEG and the common electrodes COM described above. Dotted frames in FIG. 1 indicate that a pair of electrode layers are formed. The same applies to dotted frames in FIG. 14 described later. The electrode layers may be configured as shown in FIG. 16 described later. The electrode layers may be configured with a transparent substrate including the segment electrodes SEG and a transparent substrate including the common electrodes COM. The transparent substrate is, for example, a transparent glass substrate. The light control sheet 1000 is configured such that, for example, the pair of electrode layers sandwich the light control layer, and further, the pair of transparent base material layers sandwich that pair of electrode layers. As the transparent base material layer, for example, a known configuration such as a transparent synthetic resin such as polyethylene terephthalate (PET) or transparent glass can be widely adopted. The segment electrodes SEG, the common electrodes COM, and signal lines which couple these electrodes are also made of a transparent material such as indium tin oxide (ITO). The light control layer has a transparent state and an opaque state. The transparent state refers to a state in which a contour of an object can be visually recognized through the light control sheet 1000, and the opaque state refers to a state in which the contour of the object cannot be visually recognized through the light control sheet 1000. The transmittance in the transparent state and the transmittance in the opaque state do not need to be strictly defined as long as the transmittances are within a range in which the transmittances can be handled as such states. The object refers to an object located at a position opposite to the observation position across the light control sheet 1000, and may be a mobile object such as an automobile, a moving body such as a person, or a stationary body such as a figurine. The light control layer includes, for example, a high-molecular polymer having a plurality of voids and a capsule-shaped liquid crystal composition which fills the voids. The liquid crystal composition includes a plurality of liquid crystal molecules to constitute the light control layer, and switching between the transparent state and the opaque state can be realized by changing the alignment of the liquid crystal molecules by applying a voltage to the pair of electrode layers. For example, in a state in which no voltage is applied to the pair of electrode layers, when the alignment direction of the liquid crystal molecules contained in the light control layer is random, visible light incident on the light control sheet 1000 from either one of the pair of transparent base material layers is scattered in various directions in the light control layer, and thus the opaque state is realized. On the other hand, when a voltage is applied to the pair of electrode layers, the alignment of the liquid crystal molecules changes from a random direction to a direction in which visible light is transmitted, and the visible light incident on the light control sheet 1000 from either one of the pair of transparent base material layers is transmitted through the light control layer while being hardly scattered in the light control layer, and thus the light control sheet 1000 turns to the transparent state. The light control sheet 1000 that is in the opaque state when no voltage is applied and is in the transparent state when a voltage is applied as described above may be referred to as a normal type light control sheet 1000 in some cases. Note that the light control sheet 1000 that is in the transparent state when no voltage is applied and becomes in the opaque state when a voltage is applied may be referred to as a reverse type light control sheet 1000 in some cases. Although the reverse type light control sheet 1000 is known to the public and a detailed description thereof is omitted, by further providing a predetermined layer for regulating the alignment of the liquid crystal molecules between, for example, the light control layer and the pair of transparent electrode layers described above, the alignment of the liquid crystal molecules is regulated in a direction in which the visible light is transmitted in a state in which no voltage is applied to thereby realize the transparent state. In addition, by applying a voltage between the pair of transparent electrode layers in such a reverse type light control sheet 1000, the alignment of the liquid crystal molecules is changed, and the visible light incident on the light control sheet 1000 from either one of the pair of transparent base material layers is scattered in the light control layer and thus, the opaque state is realized. Such a light control sheet 1000 can be applied to, for example, a window provided to a mobile body such as a vehicle, a window provided to a building such as a house, a partition installed in an office, a show window installed in a store. The method of the present embodiment described later can be applied to either of the normal type light control sheet 1000 and the reverse type light control sheet 1000.

The circuit device 10 is an integrated circuit device in which circuit elements are formed on a semiconductor substrate made of silicon or the like by a semiconductor process. For example, the circuit device 10 is mounted on a transparent substrate including the segment electrodes SEG of the light control sheet 1000. Alternatively, the circuit device 10 may be mounted on a circuit board different from the light control sheet 1000 and may be coupled to the light control sheet 1000 with a flexible board, a cable, or the like. The circuit device 10 includes a control circuit 100 and a drive circuit 200. The control circuit 100 controls the drive circuit 200. The circuit device 10 may include a plurality of drive circuits 200. More specifically, the circuit device 10 may include the same number of drive circuits 200 as the number of segment electrodes SEG or common electrodes COM. In the present embodiment, as shown in FIG. 1, the drive circuit 200 that drives the first segment electrode SEG1 and the first common electrode COM1 is referred to as a first drive circuit 210. In addition, the drive circuit 200 that drives the K-th segment electrode SEGK and the K-th common electrode COMK can be generalized to be referred to as a K-th drive circuit 2K0. In the present embodiment, the first drive circuit 210 includes a first segment drive circuit 21S that drives the first segment electrode SEG1 and a first common drive circuit 21C that drives the first common electrode COM1. More generally, it can be said that the K-th drive circuit 2K0 includes a K-th segment drive circuit 2KS that drives the K-th segment electrode SEGK and a K-th common drive circuit 2KC that drives the K-th common electrode COMK. When these circuits are not distinguished from each other, these circuits can also be referred to as segment drive circuits 20S and common drive circuits 20C. For example, the circuit device 10 in FIG. 16 described later is an example including K K-th drive circuits 2K0 and one common drive circuit 20C.

As described above, the present embodiment relates to one circuit device 10 that controls the K drive circuits 200. In order to drive the light control sheet 1000, it is necessary to increase the voltage to, for example, about 60 V. In addition, since it is necessary to charge or discharge a large amount of electric charge to or from the electrode in order to make it possible to change between the transparent state and the opaque state in the entire area of the light control sheet 1000 large in area, the amount of current for the charge or the discharge increases. Therefore, when the K drive circuits 200 simultaneously drive the K sets of segment electrodes SEG and common electrodes COM, a large amount of heat is generated in one circuit device 10. Therefore, it is desired to propose a method of dispersing that amount of heat generated.

The circuit device 10 of the present embodiment may further include another component. The other component is, for example, a monitoring circuit 300 described later. Although described later in detail, the monitoring circuit 300 related to the first segment drive circuit 21S will be described as a first monitoring circuit 31S. Similarly, the monitoring circuit 300 related to the second segment drive circuit 22S will be described as a second monitoring circuit 32S.

The drive circuit 200 performs polarity inversion driving on the segment electrodes SEG and the common electrodes COM. For example, the control circuit 100 performs control of inverting a driving polarity of the segment drive circuit 20S and control of inverting a driving polarity of the common drive circuit 20C every timing when a synchronization signal as an internal signal is generated. Although described later in detail, the control circuit 100 controls the segment drive circuit 20S and the common drive circuit 20C so as to disperse that amount of heat generated as described above.

Hereinafter, for the sake of convenience, the description will be made while appropriately omitting the methods, configurations, operations, and so on described above. For example, since all of the K drive circuits 200 are substantially the same in configuration, the first drive circuit 210 will be described as an example, and the description of the other drive circuits 200 will be omitted unless otherwise specified. In addition, since the configuration of the first segment drive circuit 21S is common to the configuration of the first common drive circuit 21C, in the present embodiment, an operation related to the first segment drive circuit 21S will be described, and the description related to the first common drive circuit 21C will be omitted.

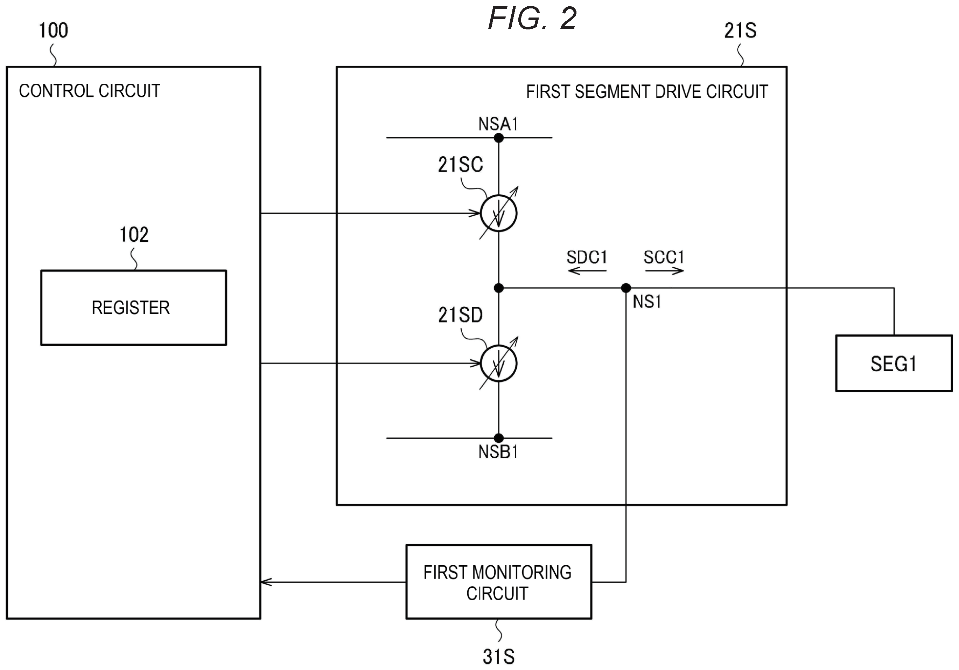

FIG. 2 is a diagram illustrating a configuration related to drive control of the first segment electrode SEG1 in more detail out of the circuit device 10 of the present embodiment. The control circuit 100 includes, for example, a register 102. The register 102 is configured with, for example, flip-flop circuits and stores various data related to the method of the present embodiment as described later. That is, the control circuit 100 includes a logic circuit (not shown) and performs various types of control described later based on data set in the register 102. Although not illustrated, the circuit device 10 further includes an interface circuit for storing predetermined data in the register 102. The predetermined data is, for example, comparing data related to a comparing voltage VC1 according to the method of the present embodiment, the number of steps of controlling the comparing voltage VC1, a value of a current SCC1, a value of a current SDC1, and a value of a predetermined current value, and details thereof will be described later. The interface circuit receives predetermined data from a host device (not illustrated) by performing communication compliant with a predetermined communication method with the host device, and the predetermined data is stored in the register 102. The predetermined communication method is, for example, a serial interface method such as an inter-integrated circuit (I²C) method or a serial peripheral interface (SPI) method, but may be a parallel interface method. Alternatively, the circuit device 10 may include a nonvolatile memory (not illustrated). When the circuit device 10 is manufactured, when an electronic apparatus including the circuit device 10 and the light control sheet 1000 is manufactured, or the like, the predetermined data described above is written in the nonvolatile memory in advance. In initialization processing at the time of starting up the circuit device 10 or the like, predetermined data is loaded from the nonvolatile memory to the register 102.

As shown in FIG. 2, the first segment drive circuit 21S includes a first charging current source 21SC and a first discharging current source 21SD. The first charging current source 21SC is disposed between a node NSA1 and a node NS1. Further, the first discharging current source 21SD is disposed between the node NS1 and a node NSB1. The first charging current source 21SC and the first discharging current source 21SD are both variable current sources, and both flow a current of a constant value that can be changed by the control circuit 100. The node NSA1 is a high potential side power supply node and can also be called a power supply node in the present embodiment. The node NSB1 is a low potential side power supply node and can also be called a ground node in the present embodiment. However, the low potential side power supply is not limited to the ground, and may be any power supply lower in voltage than the high potential side power supply. The node NS1 is a node coupled to the first segment electrode SEG1, and can also be referred to as a first output node as an output node of the first segment drive circuit 21S. Hereinafter, a current flowing from the node NS1 toward the first segment electrode SEG1 when the first segment electrode SEG1 is charged is referred to as the current SCC1. On the other hand, a current flowing from the first segment electrode SEG1 toward the ground node when the first segment electrode SEG1 is discharged is referred to as a current SDC1.

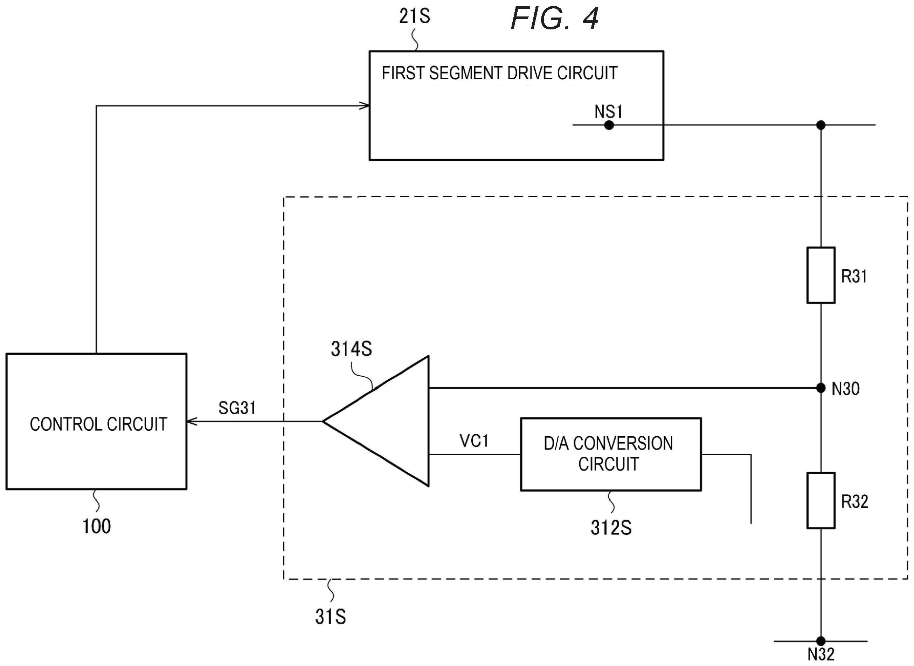

The first monitoring circuit 31S detects the voltage of the node NS1. Although described later in detail, the first monitoring circuit 31S compares the voltage of the node NS1 with a comparator 314S or the like described later in FIG. 4, and transmits, to the control circuit 100, a detection signal based on a result of the comparison. The control circuit 100 controls the first charging current source 21SC and the first discharging current source 21SD based on the detection signal thus received. Although the first monitoring circuit 31S and the first segment drive circuit 21S are illustrated separately from each other in FIG. 2, the first monitoring circuit 31S may be configured so as to be provided to the first segment drive circuit 21S. Although not illustrated and not described, the circuit device 10 of the present embodiment similarly includes the monitoring circuit 300 that compares a voltage of an output node of the first common drive circuit 21C. The same applies to the rest of the drive circuits 200.

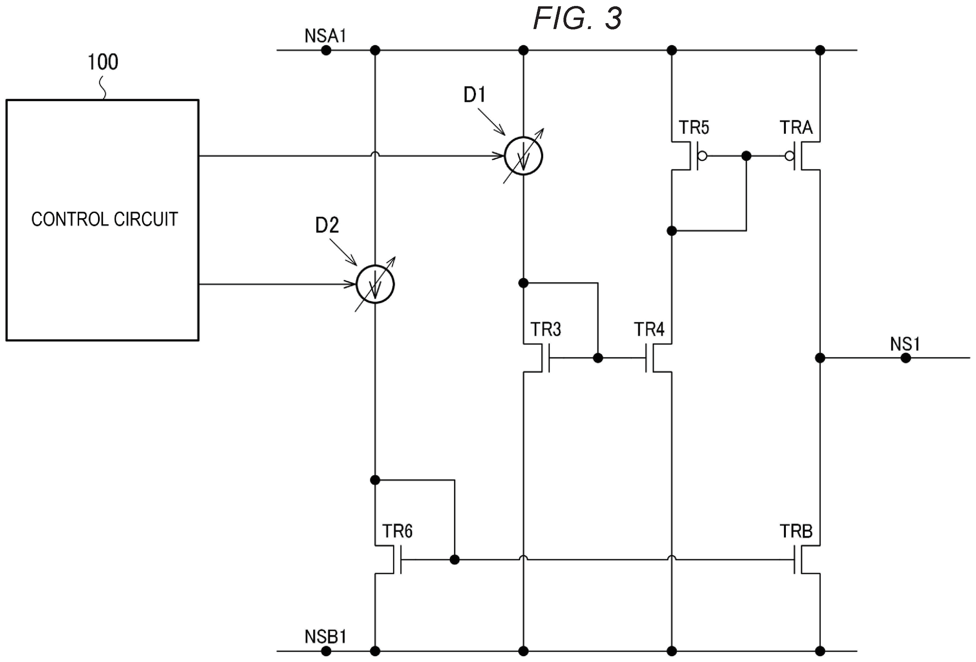

More specifically, the first charging current source 21SC and the first discharging current source 21SD in FIG. 2 are as shown in FIG. 3. The control circuit 100 controls a variable current source indicated by D1 and a variable current source indicated by D2. The variable current source indicated by D1 can appropriately adopt a known configuration, and can be realized by, for example, being configured with a transistor (not illustrated) and controlling a current flowing through that transistor by controlling a voltage input to the gate of that transistor. In this case, it is sufficient that, for example, I-V characteristic data of such a transistor is stored in the register 102, and the control circuit 100 outputs a voltage corresponding to a desired current based on the I-V characteristic data stored in the register 102. Alternatively, although not illustrated, the variable current source indicated by D1 may be realized by a current mirror circuit and a switch circuit. For example, the current mirror circuit is configured with a first transistor through which a reference current from a reference current generation circuit (not illustrated) flows and a second transistor through which a current obtained by mirroring that reference current flows. The second transistor includes a plurality of unit transistors coupled in parallel to each other and a switch circuit, and the reference current to be mirrored can be variably set in accordance with the number of unit transistors selected from the plurality of unit transistors by the switch circuit. In this case, the control circuit 100 sufficiently controls ON and OFF of the switch circuit so as to achieve a combination of the unit transistors corresponding to the desired current. Similarly to the variable current source indicated by D1, it is sufficient to appropriately adopt a known configuration for the variable current source indicated by D2.

The variable current source indicated by D1 is disposed between the node NSA1 and a transistor TR3. The transistor TR3 is an N-type MOS transistor and constitutes a current mirror circuit with a transistor TR4 as an N-type MOS transistor. The drain of the transistor TR3 is coupled to an output node of the variable current source indicated by D1, the gate of the transistor TR3 is coupled to the gate of the transistor TR4, and the source of the transistor TR3 is coupled to the node NSB1. As described above, the current flowing with the variable current source indicated by D1 is mirrored as the current flowing through the transistor TR4.

The variable current source indicated by D2 is disposed between the node NSA1 and a transistor TR6. The transistor TR6 is an N-type MOS transistor and constitutes a current mirror circuit with a transistor TRB as an N-type MOS transistor. The drain of the transistor TR6 is coupled to an output node of the variable current source indicated by D2, the gate of the transistor TR6 is coupled to the gate of the transistor TRB, and the source of the transistor TR6 is coupled to the node NSB1. The drain of the transistor TRB is coupled to the node NS1, and the source of the transistor TRB is coupled to the node NSB1. That is, the current flowing with the variable current source indicated by D2 is a current mirrored as a current flowing through the transistor TRB, and is also a current SDC1 flowing from the node NS1 toward the node NSB1 in the discharging of the first segment electrode SEG1.

In addition, the drain of the transistor TR4 is coupled in series to the drain of a transistor TR5 as a P-type MOS transistor. In addition, the transistor TR5 constitutes a current mirror circuit with a transistor TRA as a P-type MOS transistor. The source of the transistor TR5 is coupled to the node NSA1, and the gate of the transistor TR5 is coupled to the drain of the transistor TR4 and is coupled to the gate of the transistor TRA. In addition, the source of the transistor TRA is coupled to the node NSA1, and the drain of the transistor TRA is coupled to the node NS1. As described above, the current flowing through the transistor TR4 is mirrored as the current flowing through the transistor TRA. That is, the current flowing with the variable current source indicated by D1 is a current mirrored as a current flowing through the transistor TRA, and is also the current SCC1 flowing from the node NSA1 toward the node NS1 in the charging of the first segment electrode SEG1.

The control circuit 100 controls the current source indicated by D1 and the current source indicated by D2 to cause the first segment drive circuit 21S to operate so that a desired amount of current flows for a desired period. Although described later in detail, for example, the control circuit 100 controls a current value of the current source indicated by D1 to increase as the voltage of the node NS1 detected by the first monitoring circuit 31S rises while charging the first segment electrode SEG1. In other words, the control circuit 100 increases the charging current value with the first charging current source 21SC as the voltage of the first output node rises. Further, for example, the control circuit 100 controls the current value of the current source indicated by D2 to increase as the voltage of the node NS1 detected by the first monitoring circuit 31S decreases while discharging the first segment electrode SEG1. In other words, the control circuit 100 increases the discharge current value with the first discharging current source 21SD as the voltage of the first output node drops.

As described above, the present embodiment relates to the circuit device 10 that performs polarity inversion driving on the segment electrodes SEG and the common electrodes COM of the light control sheet 1000. The circuit device 10 includes the first drive circuit 210 that drives the first segment electrode SEG1, the first monitoring circuit 31S that detects the voltage of the first output node as the output node of the first drive circuit 210, and the control circuit 100. The first drive circuit 210 includes the first charging current source 21SC that is disposed between the first output node and the power supply node to charge the first segment electrode SEG1, and the first discharging current source 21SD that is disposed between the ground node and the first output node to discharge the first segment electrode SEG1. The control circuit 100 increases the charging current value with the first charging current source 21SC as the voltage of the first output node detected by the first monitoring circuit 31S rises, and increases the discharge current value with the first discharging current source 21SD as the voltage of the first output node detected by the first monitoring circuit 31S drops.

Since the circuit device 10 of the present embodiment includes the control circuit 100 and the first drive circuit 210, the circuit device 10 can perform polarity inversion driving on the segment electrodes SEG and the common electrodes COM. Further, the circuit device 10 includes the first monitoring circuit 31S, and can therefore perform control based on monitoring of the voltage of the output node of the first drive circuit 210. In addition, the first drive circuit 210 includes the first charging current source 21SC and the first discharging current source 21SD, and can therefore perform control of causing a constant current to flow within a desired period when charging and discharging the first segment electrode SEG1. In addition, the control circuit 100 increases the charging current value with the first charging current source 21SC as the voltage of the first output node rises, and can therefore make the amount of heat generated in the transistor provided to the first charging current source 21SC substantially constant. When the charging transistor is simply turned ON as in the related art, since the timing at which the charging transistor is turned ON is the timing at which the voltage applied between the source and the drain is the highest and the current flowing between the source and the drain is also the highest, the timing at which the charging transistor is turned ON is the timing at which the power, which is the product of the voltage and the current, is the highest. Meanwhile, after the transistor is turned ON, the voltage applied between the source and the drain decreases, and the current flowing between the source and the drain also decreases, and thus the power, which is the product of the voltage and the current, decreases rapidly. In this regard, by applying the method of the present embodiment, since the voltage of the first output node is low and therefore the charging current value is lowered in a period not long since the charging transistor is turned ON, and the charging current value increases as time elapses, it is possible to make the power, that is the product of the voltage and the current, substantially constant. Accordingly, it is possible to suppress a steep temperature rise of the circuit device 10 in the charge of the segment electrode SEG. In addition, as described above, when performing the discharge drive on the segment electrode SEG of the light control sheet 1000, the timing at which the discharging transistor is turned ON is the timing at which the power peak is the highest. Therefore, by applying the method of the present embodiment, it is possible to suppress a steep temperature rise of the circuit device 10 also in the discharge of the segment electrode SEG.

Details of the configuration and operation of the first monitoring circuit 31S will be described. FIG. 4 is a diagram illustrating a more detailed configuration example of the first monitoring circuit 31S. The first monitoring circuit 31S includes a D/A conversion circuit 312S and a comparator 314S. The D/A conversion circuit 312S performs a D/A conversion on the comparing voltage data to output a comparing voltage VC1. Although described later in detail, the comparing data is, for example, data stored in the register 102 by the control circuit 100, and the control circuit 100 outputs the comparing data to the D/A conversion circuit 312S in a timely manner. The comparator 314S compares the voltage of the first output node with the comparing voltage VC1, and then outputs an output signal SG31 as a comparison result to the control circuit 100.

The first monitoring circuit 31S may further include a voltage dividing circuit. The comparator 314S may compare a voltage obtained by dividing the voltage of the first output node with the voltage dividing circuit and the comparing voltage VC1 with each other. Specifically, for example, the voltage dividing circuit includes a resistor R31 and a resistor R32. One end of the resistor R31 is coupled to the node NS1, and the other end of the resistor R31 is coupled to a node N30. One end of the resistor R32 is coupled to the node N30, and the other end of the resistor R32 is coupled to a node N32. That is, the node N30 is an output node of the voltage dividing circuit. The node N32 is, for example, a ground node. In the present embodiment, it is assumed that the output voltage from the node N30 is input to a positive electrode side node of the comparator 314S, and the comparing voltage VC1 is input to a negative electrode side node.

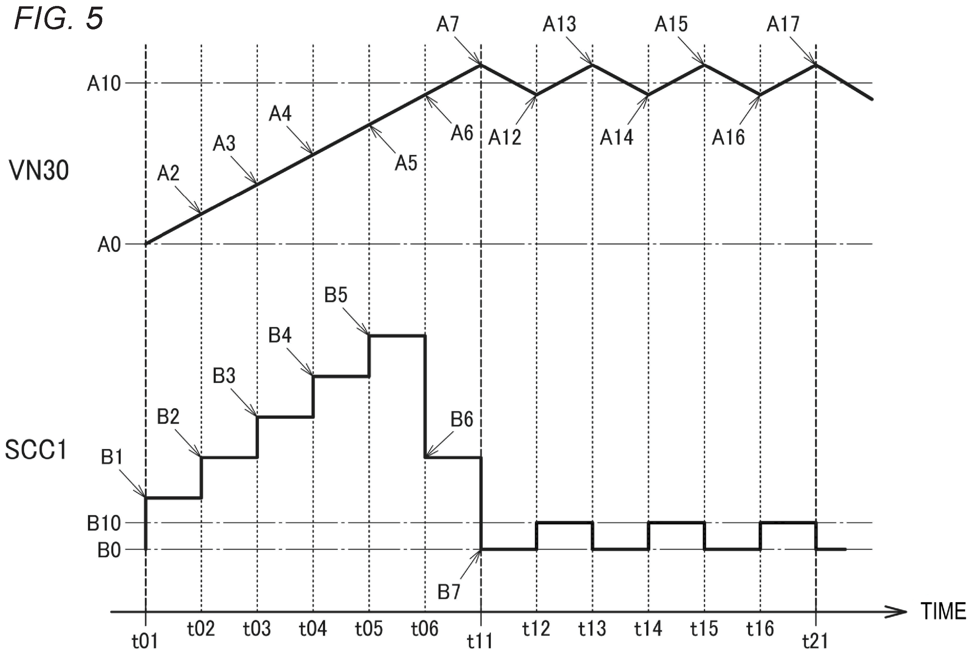

Although a detailed control method will be described later, by configuring the first monitoring circuit 31S in this way, a relationship between a behavior of a voltage VN30 and a behavior of the current SCC1 in charging the first segment electrode SEG1 is as shown in FIG. 5. At the timing t01, charging of the first segment electrode SEG1 is started, and the current SCC1 is changed from the magnitude indicated by B0 to the magnitude indicated by B1 by the first charging current source 21SC. In the present embodiment, a current value having the magnitude indicated by B1 can also be referred to as a first charging current value. Accordingly, the voltage VN30 increases since a potential is generated at the node N30 by the voltage dividing circuit, and at the timing t02, the voltage VN30 increases from the magnitude indicated by A0 to the magnitude indicated by A2. The broken line indicated by A0 is a specified value at a low potential side of the drive voltage of the first segment electrode SEG1, and a specific voltage may be appropriately determined by the user.

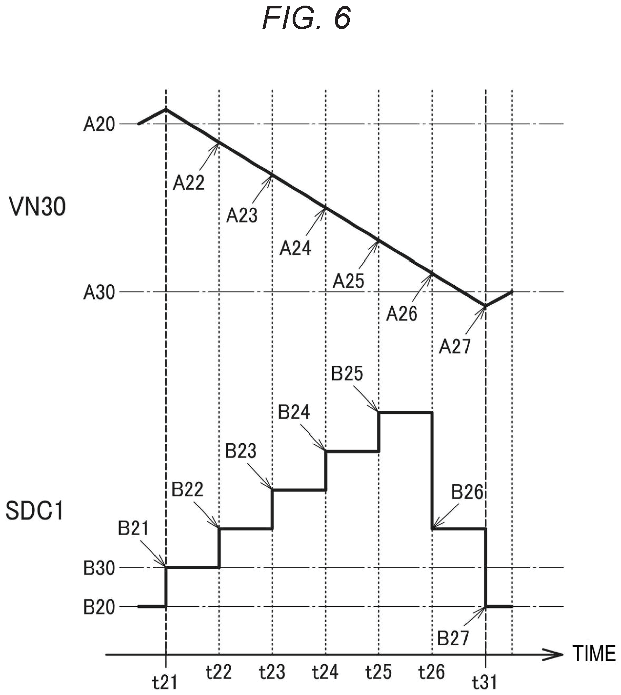

In the present embodiment, the current SCC1 can be set to N types of discrete N-th charging current values by the first charging current source 21SC. In FIG. 5, the description is presented assuming more specifically N=6, but N is not limited to 6. Similarly, the current SDC1 described later can be set to N types of discrete N-th discharge current values by the first discharging current source 21SD, and in FIG. 6 described later, the description will be presented assuming more specifically N=6, but N is not limited to 6.

At the timing t02, the control circuit 100 controls the first charging current source 21SC by one step, and the current SCC1 changes to have the magnitude indicated by B2 larger than the magnitude indicated by B1. In the present embodiment, the current value having the magnitude indicated by B2 can also be referred to as a second charging current value. As a result, the voltage VN30 further increases to the magnitude indicated by A3 at the timing t03. The timing t02 is determined by the determination of the comparator 314S, and this point will be described later. Then, at the timing t03, the control circuit 100 controls the first charging current source 21SC by one step, and the current SCC1 changes to have the magnitude indicated by B3 larger than the magnitude indicated by B2. In the present embodiment, the current value having the magnitude indicated by B3 can also be referred to as a third charging current value. As a result, the voltage VN30 further increases to the magnitude indicated by A4 at the timing t04. Then, at the timing t04, the control circuit 100 controls the first charging current source 21SC by one step, and the current SCC1 changes to have the magnitude indicated by B4 larger than the magnitude indicated by B3. In the present embodiment, the current value having the magnitude indicated by B4 can also be referred to as a fourth charging current value. As a result, the voltage VN30 further increases to the magnitude indicated by A5 at the timing t05. Then, at the timing t05, the control circuit 100 controls the first charging current source 21SC by one step, and the current SCC1 changes to have the magnitude indicated by B5 larger than the magnitude indicated by B4. In the present embodiment, the current value having the magnitude indicated by B5 can also be referred to as a fifth charging current value. As a result, the voltage VN30 further rises to the magnitude indicated by A6 at the timing t06.

Then, at the timing t06, the control circuit 100 controls the first charging current source 21SC by one step, and the current SCC1 changes to have the magnitude indicated by B6 smaller than the magnitude indicated by B5. In the present embodiment, the current value having the magnitude indicated by B6 can also be referred to as a sixth charging current value. As a result, the voltage VN30 further rises to the magnitude indicated by A7 at the timing t11. A10 in FIG. 5 is a voltage obtained by dividing a design drive voltage of the first segment electrode SEG1 with the voltage dividing circuit, and is a specified value at an upper limit side of an N-th charging current value. That is, at the timing t06, since the magnitude of the voltage VN30 indicated by A6 is close to the specified value at the upper limit side, when substantially the same control as the control from the timing t02 to the timing t05 is performed at timing posterior to the timing t06, overshoot occurs in the voltage VN30. Therefore, in order to suppress the overshoot in the voltage VN30, the current SCC1 is suppressed to the magnitude indicated by B6.

Then, at the timing t11, the control circuit 100 controls the first charging current source 21SC by one step, and the current SCC1 changes to have the magnitude indicated by B7 smaller than the magnitude indicated by B6. Similarly to the magnitude indicated by B0, the magnitude indicated by B7 is zero. That is, since the voltage VN30 has the magnitude indicated by A7, the current SCC1 is prevented from flowing.

However, as is understood from FIGS. 2 and 4, since the first segment drive circuit 21S in the present embodiment is configured such that the resistor R31 and the resistor R32 are arranged between the first segment electrode SEG1 and the ground node, there is a path that naturally discharges from the first segment electrode SEG1 having been charged toward the ground node. Therefore, in the present embodiment, after the charge of the first segment electrode SEG1 is completed, the following control is performed from the timing t11 to the timing t21 so as to maintain the drive voltage of the first segment electrode SEG1.

For the above reason, from the timing t11 to the timing t12, the voltage VN30 drops to the magnitude indicated by A12. At the timing t12, in the first charging current source 21SC, the current SCC1 becomes to have the magnitude indicated by B10 due to the control described later. Accordingly, the voltage VN30 rises again, and at the timing t13, the voltage VN30 rises to the magnitude indicated by A13.

In the present embodiment, the current value having the magnitude indicated by B10 can also be referred to as a predetermined current value. In FIG. 5, the magnitude indicated by B10 is illustrated to be smaller than the magnitude indicated by B1, but is preferably smaller than a difference between the (N-1)-th charging current value and the N-th charging current value. That is, in the circuit device 10 of the present embodiment, the predetermined current value is smaller than the current value per step when increasing the charging current value by the first charging current source 21SC. In this way, when the first segment electrode SEG1 is charged, the voltage of the first output node can be made constant, and therefore, charging drive of the first segment electrode SEG1 can be stably performed.

A predetermined current value and a register value corresponding thereto may be stored in the register 102. That is, the circuit device 10 of the present embodiment includes the register 102 that sets the predetermined current value. In this way, it is possible to construct the circuit device 10 in which the control circuit 100 controls the first charging current source 21SC to flow a current of the predetermined current value.

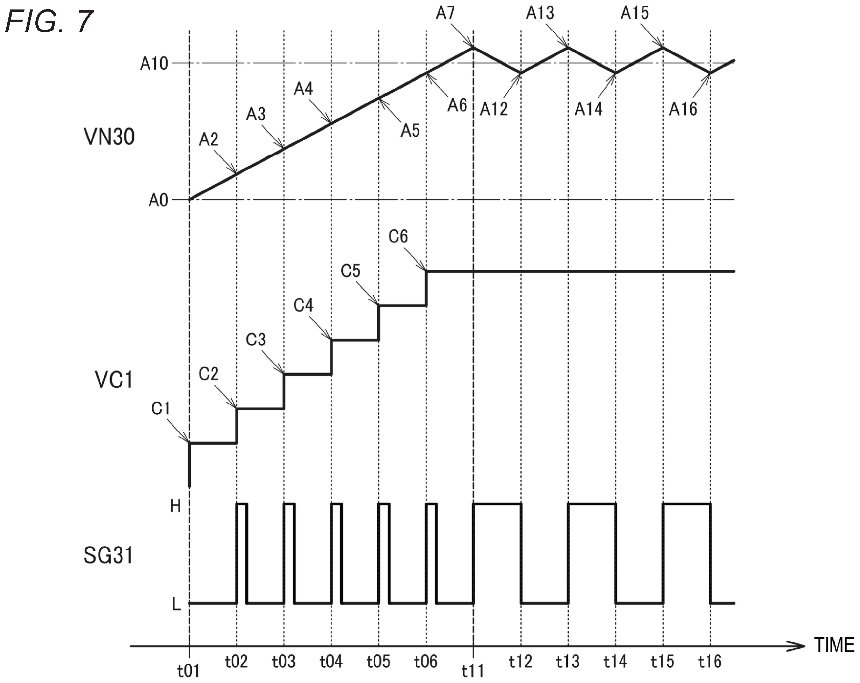

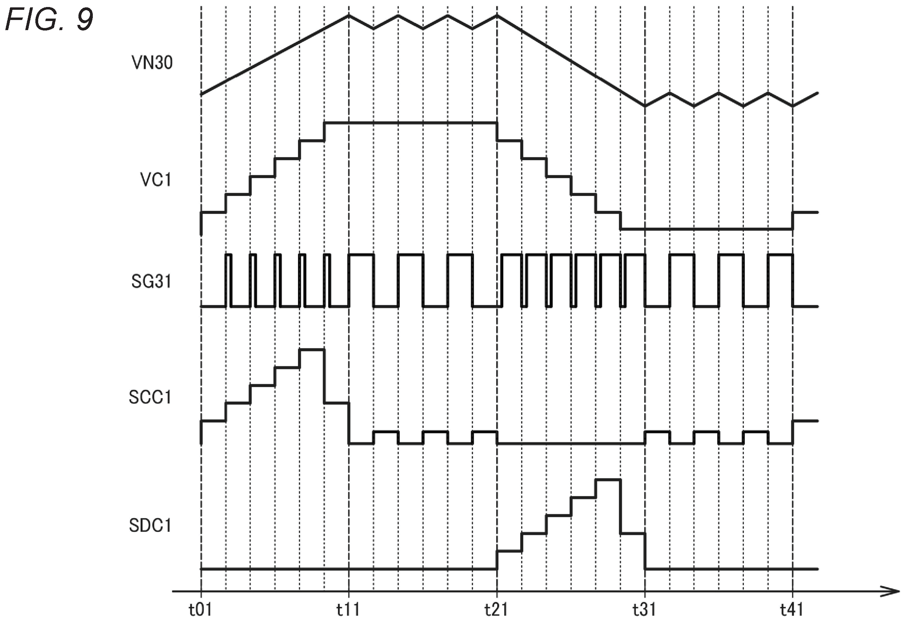

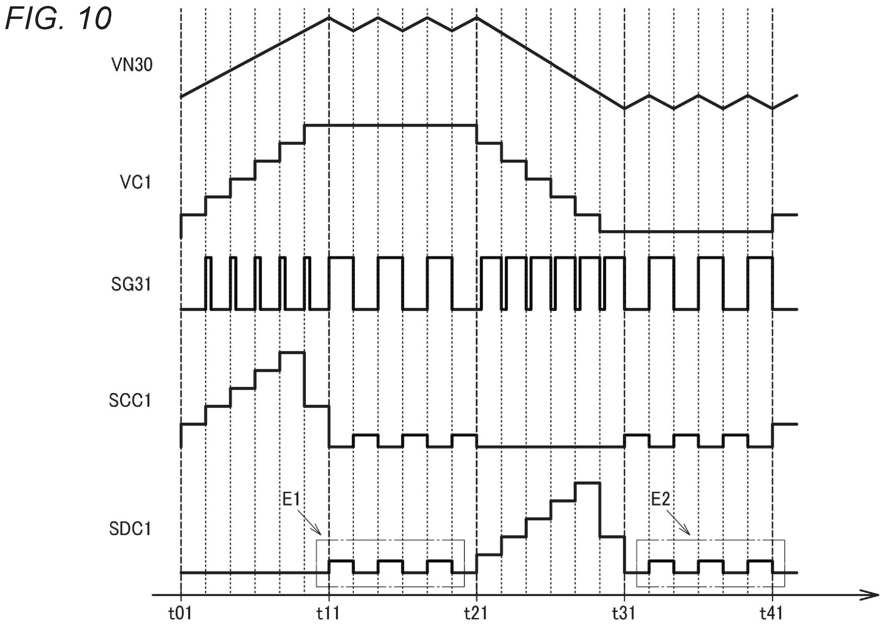

The subsequent operation from the timing t13 to the timing t14 is substantially the same as the operation from the timing t11 to the timing t12 described above. The subsequent operation from the timing t14 to the timing t15 is substantially the same as the operation from the timing t12 to the timing t13 described above. The subsequent operation from the timing t15 to the timing t16 is substantially the same as the operation from the timing t13 to the timing t14 described above. The subsequent operation from the timing t16 to the timing t21 is substantially the same as the operation from the timing t14 to the timing t15 described above. As described above, in a period from the timing t11 to the timing t21, since the current SCC1 of the predetermined current value intermittently flows, a constant drive voltage is applied to the first segment electrode SEG1. The constant drive voltage includes not only the same drive voltage but also a drive voltage when the drive voltage fluctuates to the extent that the drive voltage is allowed to be handled as the same drive voltage. As described later, the timing t21 is timing at which the discharge of the first segment electrode SEG1 is started. In FIG. 7, the timing t11 to the timing t16 are illustrated at equal intervals, but the intervals are not necessarily equal. This is because the timing t11 to the timing t16 are timing determined by the determination of the comparator 314S. The same applies to FIGS. 9 and 10.

For the sake of convenience of easy-to-understand explanation of the method of the present embodiment, differences between the magnitudes of the voltage VN30 indicated by A7, A13, A15, and A17 and the magnitude of the voltage VN30 indicated by A10 are exaggerated in FIG. 5. Similarly, in FIG. 5, differences between the magnitudes of the voltage VN30 indicated by A12, A14, and A16 and the magnitude of the voltage VN30 indicated by A10 are exaggerated. The same applies to FIGS. 7, 10, and 11 described later. Therefore, as described later in detail, for example, the current SCC1 is controlled to have the magnitude indicated by B7 at the timing when the voltage VN30 exceeds the magnitude indicated by A10, but as illustrated in FIG. 5, it is substantively allowed to handle the current SCC1 as to have the magnitude indicated by B7 at the timing t11 when the voltage VN30 has the magnitude indicated by A7. Similarly, the current SCC1 is controlled to have the magnitude indicated by B7 at the timing when the voltage VN30 falls below the magnitude indicated by A10, but as illustrated in FIG. 5, it is substantively allowed to handle the current SCC1 as to be controlled to have the magnitude indicated by B10 at the timing t12 when the voltage VN30 has the magnitude indicated by A12.

Further, by configuring the first monitoring circuit 31S, a relationship between the behavior of the voltage VN30 and the behavior of the current SDC1 in the discharge of the first segment electrode SEG1 is as shown in FIG. 6. The timing t21 in FIG. 6 corresponds to the timing t21 in FIG. 5 described above. That is, similarly to the broken line indicated by B0 in FIG. 5, the broken line indicated by B20 in FIG. 6 indicates that the current flowing through the node NS1 is zero. The broken line indicated by A20 in FIG. 6 is substantially the same as the broken line indicated by A10 in FIG. 5. At the timing t21, the discharge of the first segment electrode SEG1 is started, and the current SDC1 changes from the magnitude indicated by B20 to the magnitude indicated by B21 due to the first discharging current source 21SD. In the present embodiment, the current value having the magnitude indicated by B21 can also be referred to as a first discharge current value. As a result, since a potential is generated at the node N30 by the voltage dividing circuit, the voltage VN30 drops, and at the timing t22, the voltage VN30 drops to the magnitude indicated by A22.

Then, at the timing t22, the control circuit 100 controls the first discharging current source 21SD by one step, and the current SDC1 changes to have the magnitude indicated by B22 larger than the magnitude indicated by B21. In the present embodiment, the current value having the magnitude indicated by B22 can also be referred to as a second discharge current value. As a result, the voltage VN30 further decreases, and at the timing t23, the voltage VN30 drops to the magnitude indicated by A23. Then, at the timing t23, the control circuit 100 controls the first discharging current source 21SD by one step, and the current SDC1 changes to have the magnitude indicated by B23 larger than the magnitude indicated by B22. In the present embodiment, the current value having the magnitude indicated by B23 can also be referred to as a third discharge current value. As a result, the voltage VN30 further decreases, and at the timing t24, the voltage VN30 drops to the magnitude indicated by A24. Then, at the timing t24, the control circuit 100 controls the first discharging current source 21SD by one step, and the current SDC1 changes to have the magnitude indicated by B24 larger than the magnitude indicated by B23. In the present embodiment, the current value having the magnitude indicated by B24 can also be referred to as a fourth discharge current value. As a result, the voltage VN30 further decreases, and at the timing t25, the voltage VN30 drops to the magnitude indicated by A25. Then, at the timing t25, the control circuit 100 controls the first discharging current source 21SD by one step, and the current SDC1 changes to have the magnitude indicated by B25 larger than the magnitude indicated by B24. In the present embodiment, the current value having the magnitude indicated by B25 can also be referred to as a fifth discharge current value. As a result, the voltage VN30 further decreases, and at the timing t26, the voltage VN30 drops to the magnitude indicated by A26.

Then, at the timing t26, the control circuit 100 controls the first discharging current source 21SD by one step, and the current SDC1 changes to have the magnitude indicated by B26 smaller than the magnitude indicated by B25. In the present embodiment, the current value having the magnitude indicated by B26 can also be referred to as a sixth discharge current value. As a result, the voltage VN30 further decreases, and at the timing t31, the voltage VN30 drops to the magnitude indicated by A27. The broken line indicated by A30 in FIG. 6 is substantially the same as the broken line indicated by A0 in FIG. 5, and is the specified value at the low potential side of the drive voltage of the first segment electrode SEG1. That is, at the timing t26, since the magnitude of the voltage VN30 indicated by A26 is close to the specified value at the low potential side, when substantially the same control as the control from the timing t22 to the timing t25 is performed at timing posterior to the timing t26, undershoot occurs in the voltage VN30. Therefore, in order to suppress the undershoot in the voltage VN30, the current SDC1 is suppressed to the magnitude indicated by B26.

As described above, in the circuit device 10 of the present embodiment, the control circuit 100 sequentially sets the charging current value with the first charging current source 21SC to the first to N-th charging current values as the voltage of the first output node detected by the first monitoring circuit 31S increases. The first to (N-1)-th charging current values increase in order, and the N-th charging current value is smaller than the (N-1)-th charging current value. Further, the control circuit 100 sequentially sets the discharge current value with the first discharging current source 21SD to the first to N-th discharge current values as the voltage of the first output node detected by the first monitoring circuit 31S decreases. The first to (N-1)-th discharge current values increase in order, and the N-th discharge current value is smaller than the (N-1)-th discharge current value. In this way, the overshoot of the voltage of the first output node can be suppressed when the first segment electrode SEG1 is charged, and the undershoot of the voltage of the first output node can be suppressed when the first segment electrode SEG1 is discharged.

Then, at the timing t31, the control circuit 100 controls the first discharging current source 21SD by one step, and the current SDC1 changes to have the magnitude indicated by B27 smaller than the magnitude indicated by B26. Similarly to the magnitude indicated by B0, the magnitude indicated by B27 is zero. As described above, since the voltage of the first output node naturally decreases even when the value of the current SDC1 becomes zero, the control for maintaining the voltage VN30 at the specified value at the low potential side is performed, but since the control is the same in purpose as the control from the timing t12 to the timing t21 in FIG. 5, the illustration thereof is omitted in FIG. 6. That is, for example, in the timing chart of the voltage VN30, the behavior at and after the position indicated by A27 in FIG. 6 may be considered to correspond to the behavior at and after the position indicated by A12 in FIG. 5. Therefore, although not illustrated in FIG. 6, the control circuit 100 performs control of causing the current SCC1 having a predetermined current value to flow at the timing t31.

A specific operation of the first monitoring circuit 31S for realizing the operation related to charging and illustrated in FIG. 5 will be described with reference to FIG. 7. Since the behavior of the voltage VN30 illustrated in FIG. 7 and the reference numerals attached thereto are substantially the same as those in FIG. 5, the description of the behavior of the voltage VN30 in FIG. 7 will be appropriately omitted.

As described above with reference to FIG. 5, charging of the first segment electrode SEG1 is started at the timing t01. At the timing t01, the control circuit 100 performs a step of controlling the first charging current source 21SC so that the current SCC1 becomes to have the first charging current value, and a step of outputting the comparing data to the D/A conversion circuit 312S so that the comparing voltage VC1 output from the D/A conversion circuit 312S becomes to have the magnitude indicated by C1 in FIG. 7. Since the timing t01 is timing before the voltage VN30 rises and the voltage VN30 is smaller than the magnitude of the comparing voltage VC1 indicated by C1, the comparator 314S outputs the output signal SG31 at a low level at the timing t01.

Since the current SCC1 having the first charging current value flows at and after the timing t01, the voltage VN30 increases to the magnitude indicated by A2 at the timing t02. It is assumed that the magnitude of the voltage VN30 indicated by A2 is larger than the magnitude of the comparing voltage VC1 indicated by C1 and smaller than the magnitude of the comparing voltage VC1 indicated by C2. Accordingly, at the timing t02, the output signal SG31 output from the comparator 314S rises from the low level to a high level. When receiving the output signal SG31 at the high level, the control circuit 100 performs a step of controlling the first charging current source 21SC so that the current SCC1 becomes to have the second charging current value, and a step of outputting the comparing data to the D/A conversion circuit 312S so that the comparing voltage VC1 becomes to have the magnitude indicated by C2. For example, setting data for setting the second charging current value is stored in the register 102, and the control circuit 100 controls the first charging current source 21SC based on that setting data. Similarly, the comparing data is stored in the register 102 such that the comparing voltage VC1 has the magnitude indicated by C2, and the control circuit 100 controls the D/A conversion circuit 312S based on that comparing data. Accordingly, the magnitude of the comparing voltage VC1 changes from the magnitude indicated by C1 to the magnitude indicated by C2, and the output signal SG31 falls from the high level to the low level.

Then, since the current SCC1 having the second charging current value flows at and after the timing t02, the voltage VN30 rises to the magnitude indicated by A3 at the timing t03. It is assumed that the magnitude of the voltage VN30 indicated by A3 is larger than the magnitude of the comparing voltage VC1 indicated by C2 and smaller than the magnitude of the comparing voltage VC1 indicated by C3. Accordingly, at the timing t03, the output signal SG31 rises from the low level to the high level. When receiving the output signal SG31 at the high level, the control circuit 100 performs a step of controlling the first charging current source 21SC so that the current SCC1 becomes to have the third charging current value, and a step of outputting the comparing data to the D/A conversion circuit 312S so that the comparing voltage VC1 becomes to have the magnitude indicated by C3. Accordingly, the magnitude of the comparing voltage VC1 changes from the magnitude indicated by C2 to the magnitude indicated by C3, and the output signal SG31 falls from the high level to the low level.

Similarly, since the current SCC1 having the third charging current value flows at and after the timing t03, the voltage VN30 increases to the magnitude indicated by A4 at the timing t04. It is assumed that the magnitude of the voltage VN30 indicated by A4 is larger than the magnitude of the comparing voltage VC1 indicated by C3 and smaller than the magnitude of the comparing voltage VC1 indicated by C4. Accordingly, at the timing t04, the output signal SG31 rises from the low level to the high level. When receiving the output signal SG31 at the high level, the control circuit 100 performs a step of controlling the first charging current source 21SC so that the current SCC1 becomes to have the fourth charging current value, and a step of outputting the comparing data to the D/A conversion circuit 312S so that the comparing voltage VC1 becomes to have the magnitude indicated by C4. Accordingly, the magnitude of the comparing voltage VC1 changes from the magnitude indicated by C3 to the magnitude indicated by C4, and the output signal SG31 falls from the high level to the low level.

Similarly, since the current SCC1 having the fourth charging current value flows at and after the timing t04, the voltage VN30 increases to the magnitude indicated by A5 at the timing t05. It is assumed that the magnitude of the voltage VN30 indicated by A5 is larger than the magnitude of the comparing voltage VC1 indicated by C4 and smaller than the magnitude of the comparing voltage VC1 indicated by C5. Accordingly, at the timing t05, the output signal SG31 rises from the low level to the high level. When receiving the output signal SG31 at the high level, the control circuit 100 performs a step of controlling the first charging current source 21SC so that the current SCC1 becomes to have the fifth charging current value, and a step of outputting the comparing data to the D/A conversion circuit 312S so that the comparing voltage VC1 becomes to have the magnitude indicated by C5. Accordingly, the magnitude of the comparing voltage VC1 changes from the magnitude indicated by C4 to the magnitude indicated by C5, and the output signal SG31 falls from the high level to the low level.

Then, since the current SCC1 having the fifth charging current value flows in a period from the timing t05 to the timing t06, the voltage VN30 further increases. It is assumed that the magnitude of the voltage VN30 indicated by A6 is larger than the magnitude of the comparing voltage VC1 indicated by C5 and smaller than the magnitude of the comparing voltage VC1 indicated by C6. Accordingly, at the timing t06, the output signal SG31 rises from the low level to the high level. When receiving the output signal SG31 at the high level, the control circuit 100 performs a step of controlling the first charging current source 21SC so that the current SCC1 becomes to have the sixth charging current value, and a step of outputting the comparing data to the D/A conversion circuit 312S so that the comparing voltage VC1 becomes to have the magnitude indicated by C6. Accordingly, the magnitude of the comparing voltage VC1 changes from the magnitude indicated by C5 to the magnitude indicated by C6, and the output signal SG31 falls from the high level to the low level. As described above with reference to FIG. 5, the sixth charging current value is lower than the fifth charging current value.

As described above with reference to FIG. 5, at and after the timing t06, there is a possibility that the voltage VN30 overshoots the magnitude indicated by A10, but the control circuit 100 and the first monitoring circuit 31S perform the following operation to thereby prevent the overshoot. That is, when defining the voltage of the first output node corresponding to when the magnitude of the voltage VN30 is the magnitude indicated by A10 as a given voltage, the first monitoring circuit 31S in the present embodiment monitors whether the voltage of the first output node is higher than the given voltage.

At and after the timing t06, the control circuit 100 controls the D/A conversion circuit 312S so that the comparing voltage VC1 becomes constant at the magnitude indicated by C6. Here, the term "constant" includes maintaining a value within a range in which the value is allowed to be handled as substantially the same in addition to maintaining the same value. For example, the magnitude of the comparing voltage VC1 indicated by C6 is set to be the same as the magnitude of the voltage VN30 indicated by A10, but as described above, for example, even when the comparing voltage VC1 is changed to have the magnitude of the voltage VN30 indicated by A7 or the magnitude of the voltage VN30 indicated by A12 described later, the comparing voltage VC1 is allowed to be treated as being constant. The comparing voltage VC1 at this time can be referred to as a reference voltage. That is, the comparator 314S provided to the first monitoring circuit 31S compares the voltage VN30 which is the output voltage of the voltage dividing circuit with the reference voltage, and the control circuit 100 controls the magnitude of the current SCC1 in accordance with the comparison result of the comparator 314S. Further, as described above with reference to FIG. 5, since the voltage VN30 can be handled as to become the magnitude indicated by A10 at the timing t11 when the voltage VN30 becomes to have the magnitude indicated by A7, it is allowed to be handled that the output signal SG31 has risen to the high level at the timing t11. In addition, as described above with reference to FIG. 5, since it can be treated that the current SCC1 is controlled to be the magnitude indicated by B10 at the timing t12 when the voltage VN30 becomes to have the magnitude indicated by A12, the output signal SG31 is substantively allowed to be treated as to fall to the low level at the timing t12. The same applies to the timing t13 to the timing t16.

That is, the comparator 314S determines that the voltage of the first output node exceeds the given voltage by determining that the voltage VN30 is larger than the magnitude indicated by A10 as the reference voltage, that is, the magnitude indicated by C6 at the timing t11, and the output signal SG31 rises to the high level. Thus, upon reception of the output signal SG31 at the high level, the control circuit 100 performs a step of controlling the first charging current source 21SC so that the current SCC1 becomes zero, and a step of outputting the comparing data to the D/A conversion circuit 312S so that the comparing voltage VC1 becomes constant. The comparator 314S determines that the voltage of the first output node is lower than the given voltage by determining that the voltage VN30 is smaller than the magnitude indicated by A10 as the reference voltage, that is, the magnitude indicated by C6 at the timing t12, and the output signal SG31 falls to the low level. Upon reception of the output signal SG31 at the low level, the control circuit 100 performs a step of controlling the first charging current source 21SC so that the current SCC1 becomes to have a predetermined current value, and a step of outputting the comparing data to the D/A conversion circuit 312S so that the comparing voltage VC1 becomes constant. Accordingly, at and after the timing t12, the voltage VN30 rises, and substantially the same situation as that at the timing t11 occurs at the timing t13. Then, since substantially the same control as the control at the timing t11 is performed at the timing t13, substantially the same situation as the situation at the timing t12 occurs at the timing t14. The same applies to the timing t15 and the timing t16.

As described above, in the circuit device 10 of the present embodiment, the first monitoring circuit 31S includes the voltage dividing circuit disposed between the first output node and the ground node. The comparator 314S compares the output voltage of the voltage dividing circuit with the reference voltage corresponding to a given voltage. When maintaining the voltage of the first segment electrode SEG1, the control circuit 100 outputs the comparing voltage data representing the comparing voltage VC1 which is a constant voltage. The control circuit 100 sets the charging current value by the first charging current source 21SC to zero when the comparator 314S determines that the voltage of the first output node is higher than the given voltage, and sets the charging current value by the first charging current source 21SC to a predetermined current value larger than zero when the comparator 314S determines that the voltage of the first output node is lower than the given voltage. In this way, it is possible to perform appropriate control for maintaining the voltage of the first output node at the given voltage in accordance with the comparison result between the output voltage of the voltage dividing circuit and the reference voltage. Accordingly, the voltage of the first segment electrode SEG1 can be appropriately maintained when the first segment electrode SEG1 is charged.

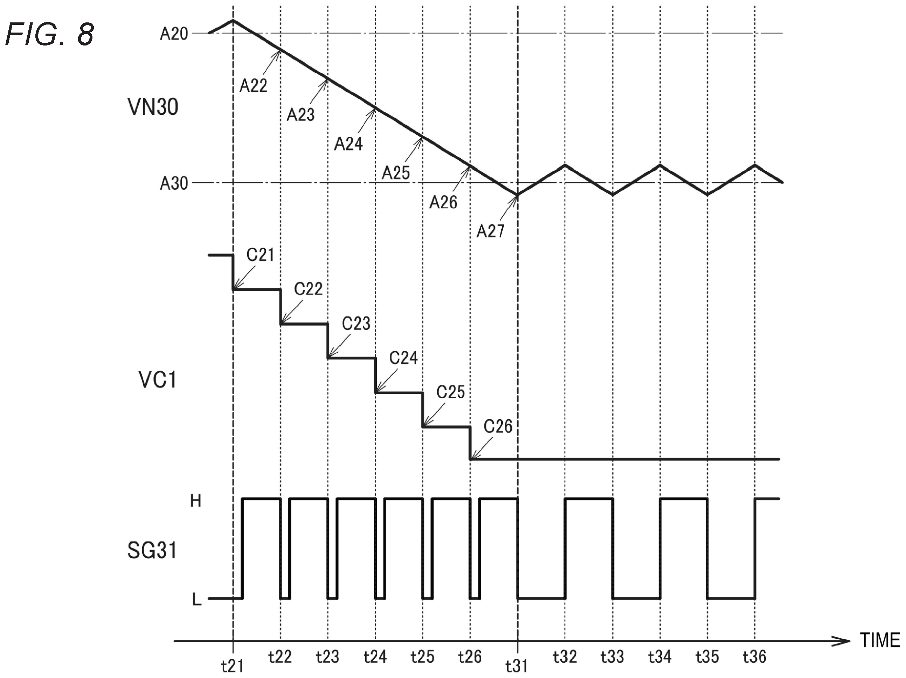

A specific operation of the first monitoring circuit 31S for realizing the operation related to the discharge illustrated in FIG. 6 will be described with reference to FIG. 8. The behavior of the voltage VN30 and the reference numerals attached thereto shown in FIG. 8 are substantially the same as those in FIG. 6. Therefore, the description of the behavior of the voltage VN30 in FIG. 8 will be omitted as appropriate.

As described above in FIG. 6, the discharge of the first segment electrode SEG1 is started at the timing t21. At the timing t21, the control circuit 100 performs a step of controlling the first discharging current source 21SD so that the current SDC1 becomes to have the first discharge current value, and a step of outputting the comparing data to the D/A conversion circuit 312S so that the comparing voltage VC1 output from the D/A conversion circuit 312S becomes to have the magnitude indicated by C21 in FIG. 8. At the timing t21, since the voltage VN30 is larger than the magnitude of the comparing voltage VC1 indicated by C21, the comparator 314S outputs the output signal SG31 at the high level.

Since the current SDC1 having the first discharge current value flows at and after the timing t21, the voltage VN30 decreases to the magnitude indicated by A22 at the timing t22. It is assumed that the magnitude of the voltage VN30 indicated by A22 is smaller than the magnitude of the comparing voltage VC1 indicated by C21 and larger than the magnitude of the comparing voltage VC1 indicated by C22. Accordingly, at the timing t22, the output signal SG31 output from the comparator 314S falls from the high level to the low level. When receiving the output signal SG31 at the low level, the control circuit 100 performs a step of controlling the first discharging current source 21SD so that the current SDC1 becomes to have the second discharge current value, and a step of outputting the comparing data to the D/A conversion circuit 312S so that the comparing voltage VC1 becomes to have the magnitude indicated by C22. For example, setting data for setting the second discharge current value is stored in the register 102, and the control circuit 100 controls the first discharging current source 21SD based on that setting data. Similarly, the comparing data is stored in the register 102 such that the comparing voltage VC1 has the magnitude indicated by C22, and the control circuit 100 controls the D/A conversion circuit 312S based on that comparing data. Accordingly, the magnitude of the comparing voltage VC1 changes from the magnitude indicated by C21 to the magnitude indicated by C22, and the output signal SG31 rises from the low level to the high level.

Then, since the current SDC1 having the second discharge current value flows at and after the timing t22, the voltage VN30 decreases to the magnitude indicated by A23 at the timing t23. It is assumed that the magnitude of the voltage VN30 indicated by A23 is smaller than the magnitude of the comparing voltage VC1 indicated by C22 and larger than the magnitude of the comparing voltage VC1 indicated by C23. Accordingly, at the timing t23, the output signal SG31 output from the comparator 314S falls from the high level to the low level. When receiving the output signal SG31 at the low level, the control circuit 100 performs a step of controlling the first discharging current source 21SD so that the current SDC1 becomes to have the third discharge current value, and a step of outputting the comparing data to the D/A conversion circuit 312S so that the comparing voltage VC1 becomes to have the magnitude indicated by C23. Accordingly, the magnitude of the comparing voltage VC1 changes from the magnitude indicated by C22 to the magnitude indicated by C23, and the output signal SG31 rises from the low level to the high level.

Similarly, since the current SDC1 having the third discharge current value flows at and after the timing t23, the voltage VN30 decreases to the magnitude indicated by A24 at the timing t24. It is assumed that the magnitude of the voltage VN30 indicated by A24 is smaller than the magnitude of the comparing voltage VC1 indicated by C23 and larger than the magnitude of the comparing voltage VC1 indicated by C24. Accordingly, at the timing t24, the output signal SG31 output from the comparator 314S falls from the high level to the low level. When receiving the output signal SG31 at the low level, the control circuit 100 performs a step of controlling the first discharging current source 21SD so that the current SDC1 becomes to have the fourth discharge current value, and a step of outputting the comparing data to the D/A conversion circuit 312S so that the comparing voltage VC1 becomes to have the magnitude indicated by C24. Accordingly, the magnitude of the comparing voltage VC1 changes from the magnitude indicated by C23 to the magnitude indicated by C24, and the output signal SG31 rises from the low level to the high level.

Similarly, since the current SDC1 having the fourth discharge current value flows at and after the timing t24, the voltage VN30 decreases to the magnitude indicated by A25 at the timing t25. It is assumed that the magnitude of the voltage VN30 indicated by A25 is smaller than the magnitude of the comparing voltage VC1 indicated by C24 and larger than the magnitude of the comparing voltage VC1 indicated by C25. Accordingly, at the timing t25, the output signal SG31 output from the comparator 314S falls from the high level to the low level. When receiving the output signal SG31 at the low level, the control circuit 100 performs a step of controlling the first discharging current source 21SD so that the current SDC1 becomes to have the fifth discharge current value, and a step of outputting the comparing data to the D/A conversion circuit 312S so that the comparing voltage VC1 becomes to have the magnitude indicated by C25. Accordingly, the magnitude of the comparing voltage VC1 changes from the magnitude indicated by C24 to the magnitude indicated by C25, and the output signal SG31 rises from the low level to the high level.

Similarly, since the current SDC1 having the fifth discharge current value flows at and after the timing t25, the voltage VN30 decreases to the magnitude indicated by A26 at the timing t26. It is assumed that the magnitude of the voltage VN30 indicated by A26 is smaller than the magnitude of the comparing voltage VC1 indicated by C25 and larger than the magnitude of the comparing voltage VC1 indicated by C26. Accordingly, at the timing t26, the output signal SG31 output from the comparator 314S falls from the high level to the low level. When receiving the output signal SG31 at the low level, the control circuit 100 performs a step of controlling the first discharging current source 21SD so that the current SDC1 becomes to have the sixth discharge current value, and a step of outputting the comparing data to the D/A conversion circuit 312S so that the comparing voltage VC1 becomes to have the magnitude indicated by C26. Accordingly, the magnitude of the comparing voltage VC1 changes from the magnitude indicated by C25 to the magnitude indicated by C26, and the output signal SG31 rises from the low level to the high level.

At and after the timing t26, the control circuit 100 controls the D/A conversion circuit 312S so that the comparing voltage VC1 becomes constant at the magnitude indicated by C26. Note that the term "constant" here is substantially the same as making the magnitude indicated by C6 in FIG. 7 constant. For example, the magnitude of the comparing voltage VC1 indicated by C26 is set to be the same as the magnitude of the voltage VN30 indicated by A30. The behavior of the voltage VN30 at and after the timing t26 is illustrated in an exaggerated manner, similarly to the behavior of the voltage VN30 in the period from the timing t06 to the timing t21 described above with reference to FIGS. 5 and 7. Therefore, since the voltage VN30 can be treated as to have the magnitude indicated by A30 at the timing t31 when the voltage VN30 has the magnitude indicated by A27, it is substantively allowed to treat the output signal SG31 as to fall to the low level at the timing t31. Further, as described above with reference to FIG. 6, the voltage VN30 rises due to the current SCC1 having the predetermined current value flowing at the timing t31, but since the voltage VN30 is allowed to be treated as to have the magnitude indicated by A30 at the timing t32, the output signal SG31 is substantively allowed to be treated as to rise to the high level at the timing t32. The same applies to the behaviors at the timing t33, the timing t34, the timing t35, and the timing t36. The detailed operation in a period from the timing t26 to the timing t36 is substantially the same as the operation in the period from the timing t06 to the timing t16 in FIG. 7, and therefore, the description thereof will be omitted. The timing t31 to the timing t36 are illustrated at equal intervals in FIG. 8, but the intervals are not necessarily equal similarly to the timing t11 to the timing t16 in FIG. 7. The same applies to FIGS. 9 and 10.

As described above, in the circuit device 10 of the present embodiment, the first monitoring circuit 31S includes the D/A conversion circuit 312S that performs the D/A conversion on the comparing voltage data to output the comparing voltage VC1, and the comparator 314S that compares the voltage of the first output node with the comparing voltage VC1. When increasing the voltage of the first segment electrode SEG1, the control circuit 100 increases the charging current value by the first charging current source 21SC by changing the comparing voltage data so as to increase the comparing voltage VC1 at the timing when the logic of the output signal SG31 of the comparator 314S is inverted. When decreasing the voltage of the first segment electrode SEG1, the control circuit 100 increases the discharge current value by the first discharging current source 21SD by changing the comparing voltage data so as to decrease the comparing voltage VC1 at the timing when the logic of the output signal SG31 of the comparator 314S is inverted. In this way, it is possible to construct the circuit device 10 that monitors the voltage of the first output node by the comparison with the comparator 314S to control the charging current value and the discharge current value in a stepwise manner.

The control circuit 100 may execute the control based on data stored in the register 102. Specifically, for example, by storing the voltage width per step when changing the comparing voltage VC1 in the register 102, the control circuit 100 can control the D/A conversion circuit 312S to set the comparing voltage VC1 indicated by C2 to C6 and C22 to C26. That is, the circuit device 10 of the present embodiment includes the register 102 that sets the voltage width per step when changing the comparing voltage VC1. In this way, it is possible to construct the circuit device 10 that controls the charging current value and the discharge current value in a stepwise manner while changing the comparing voltage VC1 with a desired voltage width.

For the sake of convenience of description, FIG. 9 shows the relationship among the voltage VN30, the comparing voltage VC1, the output signal SG31, the current SCC1, and the current SDC1 in FIGS. 5 to 8 so as to be overlooked in one drawing. The timing t41 in FIG. 9 is timing at which charging of the first segment electrode SEG1 is started, and is timing at which substantially the same operation as the operation at the timing t01 is performed. In addition, the timings t01, t11, and t21 in FIG. 9 are substantially the same as those in FIG. 5, the timing t31 is the same as that in FIG. 6, and other timings having already described are not illustrated. That is, in the first segment drive circuit 21S, the polarity related to the driving at the timing t01 to the timing t21 and the polarity related to the driving at the timing t21 to the timing t41 have an inverted relationship, and the first segment drive circuit 21S repeatedly performs the operations at the timing t01 to the timing t41.

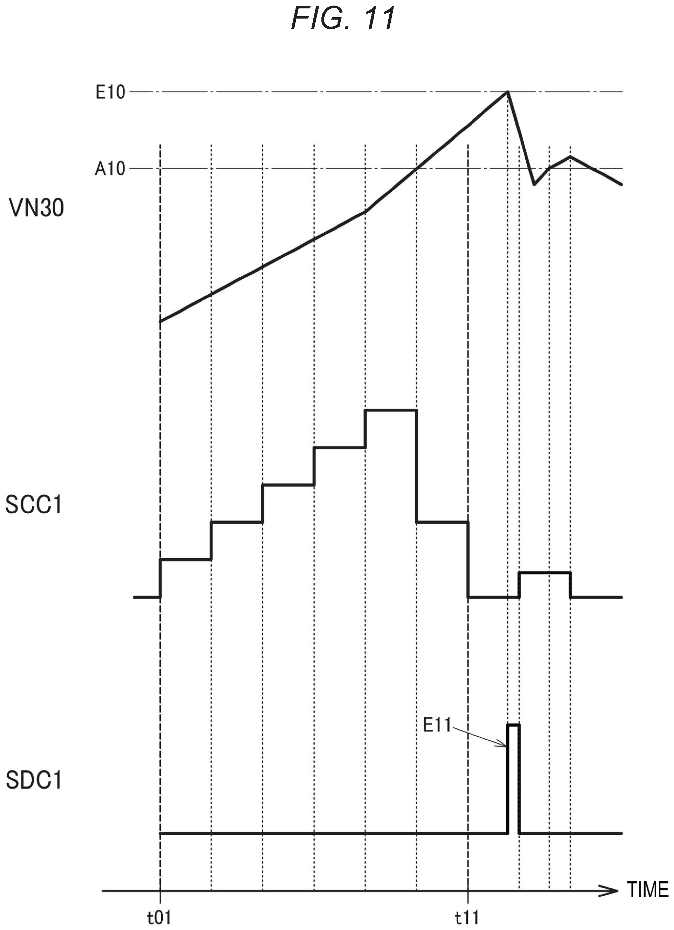

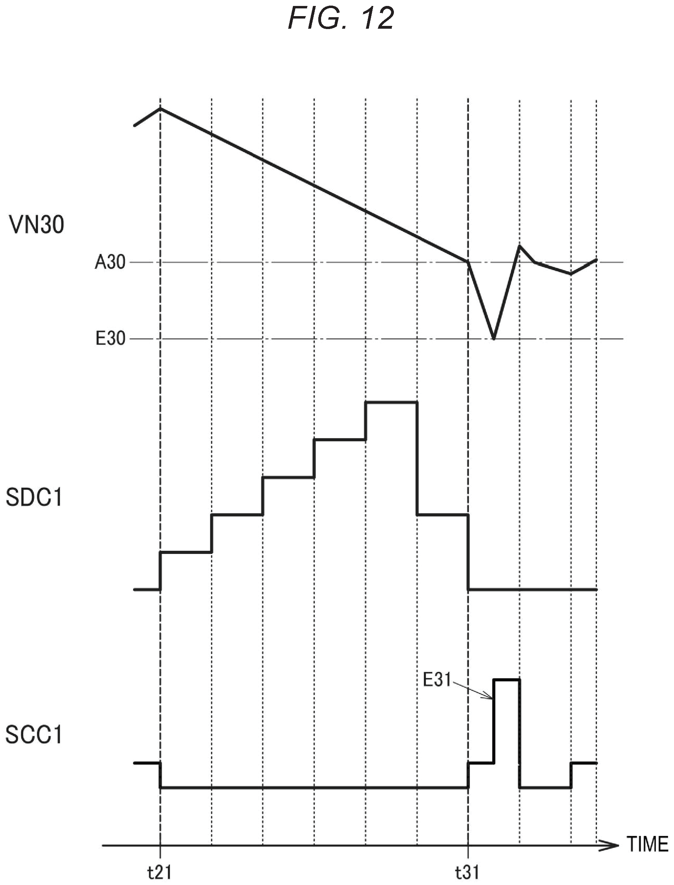

The method of the present embodiment is not limited to the above, and various modifications can be made. FIGS. 10, 11, and 12 are timing charts according to modified examples of the present embodiment. Note that in FIGS. 11 and 12, portions different from those in FIG. 9 are mainly illustrated, and other portions are substantially the same as those in FIG. 9, and are therefore omitted.

For example, although it has been described that the circuit device 10 operates such that the current SCC1 intermittently flows in the period from the timing t11 to the timing t21 and the period from the timing t31 to the timing t41, the circuit device 10 may operate such that the current SDC1 further intermittently flows as indicated by E1 and E2 in FIG. 10. As described above, for example, discharge by the voltage dividing circuit occurs in the period from the timing t11 to the timing t21 and the period from the timing t31 to the timing t41, but the voltage VN30 can be lowered in a shorter time by intentionally causing the current SDC1 to flow in accordance with the period related to the discharge. As a result, the time required for discharge can be shortened.

For example, data related to the magnitudes of the current SDC1 indicated by E1 and E2 in FIG. 10 may be stored in the register 102. For example, the user may be allowed to select whether to perform the operations related to E1 and E2 in FIG. 10, and setting information related to the selection may be stored in the register 102.

In addition, for example, in the process of charging the first segment electrode SEG1, the voltage of the output node of the first segment drive circuit 21S may be monitored, and when it is expected that the voltage deviates from a predetermined range toward the high potential side, control capable of rapidly discharging the first segment electrode SEG1 may be performed.

For example, in FIG. 11, it is assumed that when charging of the first segment electrode SEG1 is started at the timing t01, the voltage VN30 rises more than the magnitude indicated by A10 at the timing t11, and then reaches the magnitude indicated by E10. The magnitude indicated by E10 may be determined by the user as appropriate in consideration of, for example, an operating voltage range of the first segment electrode SEG1. In this case, the control circuit 100 controls the first discharging current source 21SD to rapidly output the current SDC1 as indicated by E11 and rapidly discharge the first segment electrode SEG1. Accordingly, the excessively increased potential of the node NS1 can be rapidly lowered. Data of the magnitude of the current SDC1 indicated by E11 may be stored in the register 102.

In addition, for example, in the process of discharging the first segment electrode SEG1, the voltage of the output node of the first segment drive circuit 21S may be monitored, and when it is expected that the voltage deviates from the predetermined range toward the low potential side, the first segment electrode SEG1 may rapidly be charged.

For example, in FIG. 12, it is assumed that when the discharge of the first segment electrode SEG1 is started at the timing t21, the voltage VN30 drops more than the magnitude indicated by A30 at the timing t31 and then reaches the magnitude indicated by E30. The magnitude indicated by E30 may be determined by the user as appropriate in consideration of, for example, an operating voltage range of the first segment electrode SEG1. In this case, the control circuit 100 controls the first charging current source 21SC to rapidly output the current SCC1 as indicated by E31 and rapidly charge the first segment electrode SEG1. This makes it possible to rapidly raise the potential of the node NS1 that has dropped excessively. Data of the magnitude of the current SCC1 indicated by E31 may be stored in the register 102.

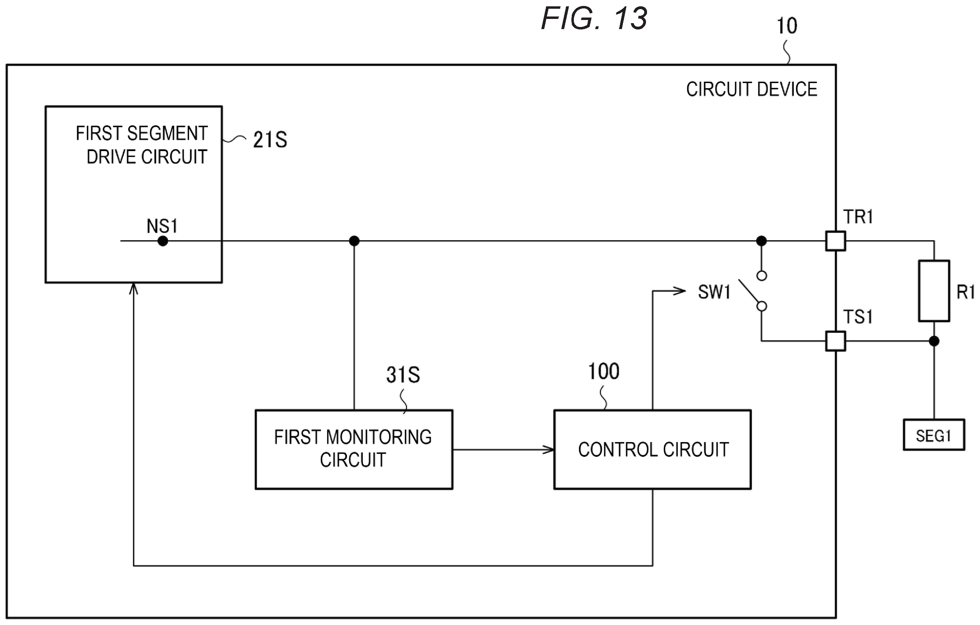

When the first segment electrode SEG1 is charged, heat generation of the circuit device 10 may be further suppressed by disposing a predetermined element or the like outside the circuit device 10. Specifically, for example, as shown in FIG. 13, the heat generation of the circuit device 10 can be further suppressed by the first resistor R1 disposed between the circuit device 10 and the first segment electrode SEG1.

Further, for example, the first segment electrode SEG1 may be driven via the first resistor R1 only during a period from the start of charging of the first segment electrode SEG1 to when the voltage of the first output node reaches a given voltage, and thereafter, the first segment electrode SEG1 may be driven by coupling the circuit device 10 and the first segment electrode SEG1 without disposing the first resistor R1 therebetween. In this case, for example, as shown in FIG. 13, the circuit device 10 can realize such control by further including a first switch SW1. More specifically, for example, as shown in FIG. 13, the circuit device 10 further includes a first resistor coupling terminal TR1, a first segment terminal TS1, and a first switch SW1 disposed between the first resistor coupling terminal TR1 and the first segment terminal TS1. The first resistor coupling terminal TR1 is disposed between one end of the first resistor R1 and the node NS1. The other end of the first resistor R1 is coupled to the first segment terminal TS1 and is coupled to the first segment electrode SEG1.

The given voltage at the first output node mentioned here is not required to have the magnitude indicated by A10 in FIG. 7 described above, and may be determined by the user as appropriate in consideration of a period in which the heat generation of the circuit device 10 is desired to be suppressed.

The first switch SW1 includes, for example, a transistor, and the control circuit 100 outputs a drive signal for controlling ON/OFF of a transistor provided to the first switch SW1. For example, when it is desired to couple the first resistor R1 and the circuit device 10 until the voltage VN30 reaches the magnitude indicated by A4 in FIG. 5, the control circuit 100 may turn OFF the first switch SW1 at the timing when the logic of a polarity inversion signal as an internal signal is inverted, and may turn ON the first switch SW1 when the magnitude of the voltage VN30 reaches the magnitude indicated by A4 in FIG. 5.

Similarly, also when the first segment electrode SEG1 is discharged, the heat generation of the circuit device 10 may be further suppressed by the first resistor R1. Further, for example, the first segment electrode SEG1 may be driven via the first resistor R1 only during a period from the start of discharge of the first segment electrode SEG1 to when the voltage of the first output node reaches the given voltage, and thereafter, control of driving the first segment electrode SEG1 without the first resistor R1 intervening between the circuit device 10 and the first segment electrode SEG1 may be performed. For example, when it is desired to couple the first resistor R1 and the circuit device 10 until the voltage VN30 reaches the magnitude indicated by A24 in FIG. 6, the control circuit 100 may turn OFF the first switch SW1 at the timing when the logic of a polarity inversion signal as an internal signal is inverted, and may turn ON the first switch SW1 when the magnitude of the voltage VN30 reaches the magnitude indicated by A24 in FIG. 6.

As described above, the circuit device 10 of the present embodiment includes the first resistor coupling terminal TR1 coupled to the first output node and coupled to the one end of the first resistor R1 the other end of which is coupled to the first segment electrode SEG1, the first segment terminal TS1 coupled to the first segment electrode, and the first switch SW1 disposed between the first resistor coupling terminal TR1 and the first segment terminal TS1. The control circuit 100 monitors the voltage of the first output node, and turns the first switch SW1 from OFF to ON when the voltage reaches a given voltage. In this way, since the first segment electrode SEG1 is charged and discharged via the first resistor R1 disposed outside the circuit device 10 until the voltage of the first output node reaches the given voltage, the rise in temperature of the circuit device 10 can be suppressed.

Although the light control system 1 in FIG. 1 is illustrated such that one circuit device 10 drives one light control sheet 1000, the method of the present embodiment can also be applied to the light control system 1 configured such that, for example, one circuit device 10 drives a plurality of light control sheets 1000. More specifically, as illustrated in FIG. 14, the circuit device 10 includes a first drive circuit 210 and a second drive circuit 220. The first drive circuit 210 drives the first segment electrode SEG1 and the first common electrode COM1 provided to a first light control sheet 1001. The second drive circuit 220 drives the second segment electrode SEG2 and the second common electrode COM2 provided to a second light control sheet 1002. More specifically, for example, the second drive circuit 220 includes a second segment drive circuit 22S and a second common drive circuit 22C, the second segment drive circuit 22S drives the second segment electrode SEG2, and the second common drive circuit 22C drives the second common electrode COM2.

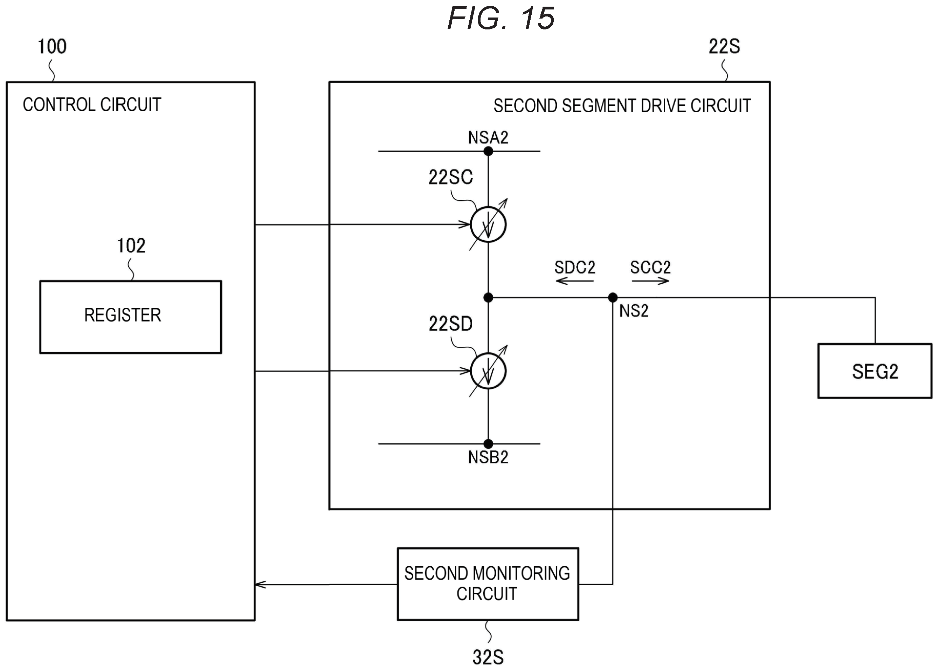

The second drive circuit 220 is substantially the same in configuration as the first drive circuit 210. FIG. 15 shows a configuration example of the second segment drive circuit 22S. The second segment drive circuit 22S includes a second charging current source 22SC and a second discharging current source 22SD. The second charging current source 22SC is disposed between a node NSA2 and a node NS2. The second discharging current source 22SD is disposed between the node NS2 and a node NSB2. Since the configuration of the second charging current source 22SC is substantially the same as the configuration of the first charging current source 21SC described above with reference to FIG. 2 and so on, and the configuration of the second discharging current source 22SD is substantially the same as the configuration of the first discharging current source 21SD described above with reference to FIG. 2 and so on, the description thereof will be omitted. The node NSA2 is a high potential side power supply node similar to the node NSA1 in FIG. 2, and can also be called a power supply node similarly. The node NSB2 is a low potential side power supply node similarly to the node NSB1, and can also be called a ground node similarly. The node NS2 is a node coupled to the second segment electrode SEG2, and can also be referred to as a second output node as an output node of the second segment drive circuit 22S. As described above with reference to FIG. 2 and so on, the current flowing from the node NS2 toward the second segment electrode SEG2 when the second segment electrode SEG2 is charged can be referred to as the current SCC2, and the current flowing from the second segment electrode SEG2 toward the ground node when the second segment electrode SEG2 is discharged can be referred to as the current SDC2.

As illustrated in FIG. 15, the circuit device 10 further includes a second monitoring circuit 32S. Similarly to the first monitoring circuit 31S, the second monitoring circuit 32S detects the voltage of the node NS2. Since a detailed configuration of the second monitoring circuit 32S is substantially the same as the configuration of the first monitoring circuit 31S described above with reference to FIG. 4, the description thereof will be omitted.

The second drive circuit 220 operates similarly to the first drive circuit 210. That is, the control circuit 100 controls the second monitoring circuit 32S, the second charging current source 22SC, the second discharging current source 22SD, and so on so that the current SCC2 and the current SDC2 become substantially the same as the current SCC1 and the current SDC1 illustrated in FIG. 10 and so on. As a result, the output voltage of the voltage dividing circuit corresponding to the voltage of the second output node becomes substantially the same as that in FIG. 10. However, the magnitudes of the currents and the voltages, the number of control steps, and so on may be appropriately changed in consideration of the specifications of the second light control sheet 1002 and so on. In such a case, data for driving the second drive circuit 220 may be stored in the register 102 separately. As described above, the circuit device 10 of the present embodiment includes the second drive circuit 220 that drives the second segment electrode SEG2 and the second monitoring circuit 32S that detects the voltage of the second output node as the output node of the second drive circuit 220. The second drive circuit 220 includes the second charging current source 22SC that is disposed between the second output node and the power supply node and charges the second segment electrode SEG2, and the second discharging current source 22SD that is disposed between the ground node and the second output node and discharges the second segment electrode SEG2. The control circuit 100 increases the charging current value with the second charging current source 22SC as the voltage of the second output node detected by the second monitoring circuit 32S rises, and increases the discharge current value with the second discharging current source 22SD as the voltage of the second output node detected by the second monitoring circuit 32S drops. In this way, it is possible to construct the circuit device 10 that drives the first segment electrode SEG1 with the first drive circuit 210 and drives the second segment electrode SEG2 with the second drive circuit 220. Accordingly, for example, it is possible to construct the circuit device 10 that performs the drive control different between the first light control sheet 1001 including the first segment electrode SEG1 and the second light control sheet 1002 including the second segment electrode SEG2. For example, when the size of the first light control sheet 1001 and the size of the second light control sheet 1002 are different, it is not necessarily preferable to uniformly perform the same drive control on each segment electrode SEG. In this regard, by applying the method of the present embodiment, optimal drive control can be performed on the segment electrodes SEG provided to each light control sheet 1000.

Although the light control system 1 that controls the light control sheet 1000 including the electrode layer configured with one segment electrode SEG and one common electrode COM has been described above, the method of the present embodiment is not limited thereto. For example, as illustrated in FIG. 16, the method of the present embodiment can also be applied to a light control system 1 that controls a light control sheet 1000 including an electrode layer configured with a plurality of segment electrodes SEG and one common electrode COM facing the plurality of segment electrodes SEG. In FIG. 16, the circuit device 10 includes K drive circuits of a first drive circuit 210 to a K-th drive circuit 2K0 and one common drive circuit 20C. The first drive circuit 210 to the K-th drive circuit 2K0 include a first segment drive circuit 21S to a K-th segment drive circuit 2KS, respectively. The first segment drive circuit 21S to the K-th segment drive circuit 2KS perform the drive control on the first segment electrode SEG1 to the K-th segment electrode SEGK, respectively. The common drive circuit 20C controls the common electrode COM. For example, when it is desired to control the alignment of the liquid crystal at a desired position, it is sufficient to control each transistor provided to the K-th segment drive circuit 2KS and each transistor provided to the common drive circuit 20C so that a desired voltage can be applied to that position. The same applies to the light control system 1 illustrated in FIG. 14. That is, although not illustrated, the light control system 1 may be configured such that at least one of the first light control sheet 1001 and the second light control sheet 1002 includes an electrode layer configured with the plurality of segment electrodes SEG and one common electrode COM facing the plurality of segment electrodes SEG. It is sufficient to constitute the circuit device 10 so that in each of the light control sheets 1000, the plurality of segment drive circuits 20S performs the drive control on the plurality of segment electrodes SEG, respectively, and one common drive circuit 20C performs the drive control on one common electrode COM. Further, although detailed description is omitted, in these light control systems 1, in order to suppress the heat generation of the circuit device 10, it is sufficient to apply the methods of the present embodiment described above in appropriate combination.

The method of the present embodiment may be realized as the light control system 1 including the circuit device 10 and the light control sheet 1000 described above. In this way, substantially the same advantages as those described above can be obtained.

As described above, the present embodiment relates to a circuit device that performs polarity inversion driving on a segment electrode and a common electrode of a light control sheet. The circuit device includes a first drive circuit that drives the first segment electrode, a first monitoring circuit that detects a voltage of an output node of the first drive circuit, and a control circuit. The first drive circuit includes a first charging current source disposed between a first output node as an output node of the first drive circuit and a power supply node and configured to charge the first segment electrode, and a first discharging current source disposed between a ground node and the first output node and configured to discharge the first segment electrode. The control circuit increases a charging current value by the first charging current source as a voltage of the first output node detected by the first monitoring circuit increases, and increases a discharge current value by the first discharging current source as the voltage of the first output node detected by the first monitoring circuit decreases.

In this way, since the voltage of the first output node is low and therefore the charging current value is lowered in a period not long since the charging transistor is turned ON, and the charging current value increases as time elapses, it is possible to make the power, that is the product of the voltage and the current, substantially constant. Accordingly, it is possible to suppress a steep rise in temperature of the circuit device in charging the segment electrode. Similarly, also in discharging the segment electrode, a steep rise in temperature of the circuit device can be suppressed.

The first monitoring circuit may include a D/A conversion circuit configured to perform D/A conversion on comparing voltage data to output a comparing voltage, and a comparator configured to compare the voltage of the first output node with the comparing voltage. When increasing a voltage of the first segment electrode, the control circuit may increase the charging current value by the first charging current source by changing the comparing voltage data so as to increase the comparing voltage at the timing when a logic of an output signal of the comparator is inverted. When decreasing the voltage of the first segment electrode, the control circuit may increase the discharge current value by the first discharging current source by changing the comparing voltage data so as to decrease the comparing voltage at the timing when the logic of the output signal of the comparator is inverted.

In this way, it is possible to construct the circuit device that monitors the voltage of the first output node by the comparison with the comparator to control the charging current value and the discharge current value in a stepwise manner.

The circuit device may include a register configured to set a voltage width per step when changing the comparing voltage.

In this way, it is possible to construct the circuit device that controls the charging current value and the discharge current value in a stepwise manner while changing the comparing voltage with a desired voltage width.

The first monitoring circuit may include a voltage dividing circuit disposed between the first output node and the ground node. The comparator may compare an output voltage of the voltage dividing circuit with a reference voltage corresponding to a given voltage. The control circuit may output the comparing voltage data representing the comparing voltage constant in magnitude when maintaining the voltage of the first segment electrode. The control circuit may set the charging current value by the first charging current source to zero when the comparator determines that the voltage of the first output node is higher than the given voltage, and set the charging current value by the first charging current source to a predetermined current value larger than zero when the comparator determines that the voltage of the first output node is lower than the given voltage.

In this way, it is possible to perform appropriate control for maintaining the voltage of the first output node at the given voltage in accordance with the comparison result between the output voltage of the voltage dividing circuit and the reference voltage. Accordingly, the voltage of the first segment electrode can be appropriately maintained when the first segment electrode is charged.

The predetermined current value may be smaller than the current value per step when the charging current value by the first charging current source is increased.

In this way, when the first segment electrode is charged, the voltage of the first output node can be made constant, and therefore, charging drive of the first segment electrode can be stably performed.

The circuit device may include a register configured to set a predetermined current value.

In this way, it is possible to construct the circuit device in which the control circuit controls the first charging current source to flow a current of the predetermined current value.

The control circuit may sequentially set the charging current value by the first charging current source to first to N-th charging current values as the voltage of the first output node detected by the first monitoring circuit increases. The first to (N-1)-th charging current values may increase in order, and the N-th charging current value may be smaller than the (N-1)-th charging current value. The control circuit may sequentially set the discharge current value by the first discharging current source to first to N-th discharge current values as the voltage of the first output node detected by the first monitoring circuit decreases. The first to (N-1)-th discharge current values may increase in order, and the N-th discharge current value may be smaller than the (N-1)-th discharge current value.

In this way, the overshoot of the voltage of the first output node can be suppressed when the first segment electrode is charged, and the undershoot of the voltage of the first output node can be suppressed when the first segment electrode is discharged.

The circuit device may include a first resistor coupling terminal coupled to the first output node and coupled to one end of a first resistor another end of which is coupled to the first segment electrode, a first segment terminal coupled to the first segment electrode, and a first switch disposed between the first resistor coupling terminal and the first segment terminal. The control circuit may monitor the voltage of the first output node and switch the first switch from OFF to ON when the voltage reaches a given voltage.

In this way, since the first segment electrode is charged and discharged via the first resistor disposed outside the circuit device until the voltage of the first output node reaches the given voltage, it is possible to suppress a rise in temperature of the circuit device.

The circuit device may include a second drive circuit configured to drive the second segment electrode and a second monitoring circuit configured to detect a voltage of an output node of the second drive circuit. The second drive circuit may include a second charging current source disposed between a second output node as the output node of the second drive circuit and the power supply node and configured to charge the second segment electrode, and a second discharging current source disposed between the ground node and the second output node and configured to discharge the second segment electrode. The control circuit may increase the charging current value by the second charging current source as the voltage of the second output node detected by the second monitoring circuit increases, and may increase the discharge current value by the second discharging current source as the voltage of the second output node detected by the second monitoring circuit decreases.

In this way, it is possible to construct the circuit device that drives the first segment electrode with the first drive circuit and drives the second segment electrode with the second drive circuit. Accordingly, for example, it is possible to construct the circuit device that performs the drive control different between the first light control sheet including the first segment electrode and the second light control sheet including the second segment electrode.

Note that the present embodiment has been described above in detail, and a person skilled in the art may readily understand that many variations are conceivable without substantively departing from the novel matters and advantages of the present disclosure. It is therefore assumed that all such variations should fall within the scope of the present disclosure. For example, a term described at least once together with a different term having a broader meaning or the same meaning in the specification or the drawings can be replaced with the different term in any part of the specification or the drawings. All combinations of the present embodiment and the variations also fall within the scope of the present disclosure. The configurations, operations, and the like of the circuit device are not limited to those described in the present embodiment, and various modifications can be made.

## Claims

1. A circuit device configured to perform polarity inversion driving on a segment electrode and a common electrode of a light control sheet, the circuit device comprising:
a first drive circuit configured to drive a first segment electrode;
a first monitoring circuit configured to detect a voltage of a first output node as an output node of the first drive circuit; and
a control circuit, wherein
the first drive circuit includes
a first charging current source disposed between the first output node and a power supply node and configured to charge the first segment electrode, and
a first discharging current source disposed between a ground node and the first output node and configured to discharge the first segment electrode, and
the control circuit is configured to
increase a charging current value by the first charging current source as the voltage of the first output node detected by the first monitoring circuit increases, and
increase a discharge current value by the first discharging current source as the voltage of the first output node detected by the first monitoring circuit decreases.

2. The circuit device according to claim 1, wherein
the first monitoring circuit includes
a D/A conversion circuit configured to perform D/A conversion on comparing voltage data to output a comparing voltage, and
a comparator configured to compare the voltage of the first output node with the comparing voltage, and
the control circuit is configured to
increase the charging current value by the first charging current source by changing the comparing voltage data so as to increase the comparing voltage at the timing when a logic of an output signal of the comparator is inverted when increasing a voltage of the first segment electrode, and
increase the discharge current value by the first discharging current source by changing the comparing voltage data so as to decrease the comparing voltage at the timing when the logic of the output signal of the comparator is inverted when decreasing the voltage of the first segment electrode.

3. The circuit device according to claim 2, further comprising
a register configured to set a voltage width per step when changing the comparing voltage.

4. The circuit device according to claim 2, wherein
the first monitoring circuit includes a voltage dividing circuit disposed between the first output node and the ground node,
the comparator compares an output voltage of the voltage dividing circuit with a reference voltage corresponding to a given voltage, and
the control circuit is configured to
output the comparing voltage data representing the comparing voltage constant in magnitude when maintaining the voltage of the first segment electrode,
set the charging current value by the first charging current source to zero when the comparator determines that the voltage of the first output node is higher than the given voltage, and
set the charging current value by the first charging current source to a predetermined current value larger than zero when the comparator determines that the voltage of the first output node is lower than the given voltage.

5. The circuit device according to claim 4, wherein
the predetermined current value is smaller than a current value per step when increasing the charging current value by the first charging current source.

6. The circuit device according to claim 4, further comprising a register configured to set the predetermined current value.

7. The circuit device according to claim 1, wherein
the control circuit sequentially sets the charging current value by the first charging current source to first to N-th charging current values as the voltage of the first output node detected by the first monitoring circuit increases,
the first to (N-1)-th charging current values increase in order,
the N-th charging current value is smaller than the (N-1)-th charging current value,
the control circuit sequentially sets the discharge current value by the first discharging current source to first to N-th discharge current values as the voltage of the first output node detected by the first monitoring circuit decreases,
the first to (N-1)-th discharge current values increase in order, and
the N-th discharge current value is smaller than the (N-1)-th discharge current value.

8. The circuit device according to claim 1, further comprising:
a first resistor coupling terminal coupled to the first output node and coupled to one end of a first resistor another end of which is coupled to the first segment electrode;
a first segment terminal coupled to the first segment electrode; and
a first switch disposed between the first resistor coupling terminal and the first segment terminal, wherein
the control circuit monitors the voltage of the first output node and switches the first switch from OFF to ON when the voltage of the first output node reaches a given voltage.

9. The circuit device according to claim 1, further comprising:
a second drive circuit configured to drive a second segment electrode; and
a second monitoring circuit configured to detect a voltage of a second output node as an output node of the second drive circuit, wherein
the second drive circuit includes
a second charging current source disposed between the second output node and the power supply node and configured to charge the second segment electrode, and
a second discharging current source disposed between the ground node and the second output node and configured to discharge the second segment electrode, and
the control circuit is configured to
increase the charging current value by the second charging current source as the voltage of the second output node detected by the second monitoring circuit increases, and
increase the discharge current value by the second discharging current source as the voltage of the second output node detected by the second monitoring circuit decreases.
